# EUROPEAN PATENT SPECIFICATION

(11) **EP 4 467 120 B1**
(45) Date of publication and mention of the grant of the patent: **01.07.2026**
(21) Application number: 23839775.6
(22) Date of filing: 16.05.2023
(51) Int. Cl.: A61H 1/02, B25J 9/00, A61H 3/00

(54) **WEARABLE DEVICE FOR PROVIDING WEARING DETECTION FUNCTION AND OPERATING METHOD OF WEARABLE DEVICE**
TRAGBARE VORRICHTUNG ZUR BEREITSTELLUNG EINER TRAGEERKENNUNGSFUNKTION UND BETRIEBSVERFAHREN EINER TRAGBAREN VORRICHTUNG
DISPOSITIF À PORTER SUR SOI POUR FOURNIR UNE FONCTION DE DÉTECTION DE PORT ET PROCÉDÉ DE FONCTIONNEMENT D'UN DISPOSITIF À PORTER SUR SOI

(30) Priority: 11.07.2022 KR 20220084908; 20.09.2022 KR 20220118447; 12.12.2022 KR 20220173149
(43) Date of publication of application: 27.11.2024
(73) Proprietor: SAMSUNG ELECTRONICS CO., LTD., Yeongtong-gu Suwon-si, Gyeonggi-do 16677 (KR)
(72) Inventor: LEE, Kiwan, Suwon-si Gyeonggi-do 16677 (KR); KIM, Mijeong, Suwon-si Gyeonggi-do 16677 (KR); KIM, Jeongrae, Suwon-si Gyeonggi-do 16677 (KR); YU, Jungpil, Suwon-si Gyeonggi-do 16677 (KR); SONG, Sukhoon, Suwon-si Gyeonggi-do 16677 (KR); AHN, Chiyoung, Suwon-si Gyeonggi-do 16677 (KR)
(74) Representative: Gulde & Partner
(86) International application number: PCT/KR2023/006597
(87) International publication number: WO 2024/014681

(56) References cited:
- CN-A- 106 466 220
- CN-A- 113 797 064
- CN-A- 113 797 064
- JP-A- 2020 532 436
- JP-A- 2020 532 436
- KR-A- 20130 045 777
- KR-A- 20130 045 777
- KR-A- 20130 045 826
- KR-A- 20130 045 826
- KR-B1- 101 841 011
- KR-B1- 101 841 011
- US-B2- 10 426 688

## Description

### BACKGROUND

### 1. Field

Certain example embodiments relate to a wearable device configured to be worn on a user's body and/or an operation method of the wearable device.

### 2. Description of Related Art

A walking assistance device generally refers to a machine or a device that helps a patient unable to walk on their own because of diseases, accidents, or other causes with their walking exercises for rehabilitation treatment, and/or which can be used for exercise. In our current, rapidly aging society, a growing number of people experience inconvenience when walking or have difficulty with normal walking due to malfunctioning joints, and there is increasing interest in walking assistance devices. A walking assistance device is worn on a user's body, for example, to assist the user in walking by providing the necessary muscular strength and to induce the user to walk in a normal walking pattern.

The following background art can be regarded as useful for understanding the invention:
JP 2020 532436 A relates to an exoskeleton conformity assessment system and method for automatically evaluating how well the device is physically fitted to a user. To address the issue of poor performance from an improper fit, the system in JP 2020 532436 A performs a "conformance test" where the user holds a static posture, such as sitting. The device then applies force via its actuators and uses its sensors to measure the resulting displacement of the exoskeleton's components; if this displacement exceeds a predetermined threshold, the device determines the fit is improper and can generate an alert for the user to correct the issue.
US 10,426,688 B2 relates to a system and method for transferring, validating, and distributing exoskeleton trajectory sequences, which are software programs that command an exoskeleton to perform complex movements. The system allows a creator to upload a motion sequence to a central server, where a distributor then validates the sequence for safety, a process which can include performing physical tests on an exoskeleton. Once validated, the sequence is made available for other exoskeleton users to purchase, license, or lease."

### SUMMARY

An object of the present invention is to provide an improved wearable device and operating method thereof that more reliably and comfortably determines if the device is properly worn by a user. While the background art, discloses performing a fit-test by applying a general actuation force, this can be uncomfortable for the user and may not be optimally targeted at diagnosing looseness in the fasteners.

The present invention solves this problem by providing a wearable device and method wherein a test is performed by controlling a driving module to generate test torque that induces a specific 'shake motion' in a leg driving frame according to device claim 1 and method claim 13. This test torque has a particular pattern designed to generate this subtle, probing shake motion, which comprises movement in a front or rear direction. The device then determines if the test is passed based on sensor data obtained during this motion.

A non-transitory computer-readable storage medium may store instructions that, when executed by a processor, cause the processor to perform the operation method of the wearable device.

Additional aspects of example embodiments will be set forth in part in the description which follows and, in part, will be apparent from the description, or may be learned by practice of the disclosure.

### BRIEF DESCRIPTION OF THE DRAWINGS

These and/or other aspects, features, and advantages will become apparent and more readily appreciated from the following description of example embodiments, taken in conjunction with the accompanying drawings of which:
FIG. 1 is a diagram illustrating an overview of a wearable device worn on a user's body, according to an example embodiment;
FIG. 2 is a diagram illustrating a management system including a wearable device and an electronic device, according to an example embodiment;
FIG. 3 is a rear schematic diagram illustrating a wearable device according to an example embodiment;
FIG. 4 is a left side view illustrating the wearable device according to an example embodiment;
FIGS. 5A and 5B are a configuration of a control system of a wearable device, according to an example embodiment;
FIG. 6 is a diagram illustrating an interaction between a wearable device and an electronic device, according to an example embodiment;
FIG. 7 is a diagram illustrating a configuration of an electronic device according to an example embodiment;
FIG. 8 is a flowchart illustrating an operating method of a wearable device, according to an example embodiment;
FIGS. 9A, 9B, 9C, and 10 are diagrams illustrating examples of performing a test to detect whether a wearable device is normally worn, according to an example embodiment;
FIG. 11 is a flowchart illustrating operations of an operating method of a wearable device for performing a normal wear detection function, according to an example embodiment;
FIG. 12 is a flowchart illustrating a process of a test in which a wear detection function is performed when a wearable device operates in an exercise assistance mode, according to an example embodiment;
FIG. 13 is a diagram illustrating a combination of tests to perform a wear detection function, according to an example embodiment; and
FIG. 14 is a diagram illustrating examples of a guide notification according to an example embodiment.

### DETAILED DESCRIPTION

The following detailed structural or functional description is provided as an example only and various alterations and modifications may be made to embodiments. Accordingly, the embodiments are not construed as limited to the disclosure and should be understood to include all changes, equivalents, and replacements within the idea and the technical scope of the disclosure.

As used herein, the singular forms "a", "an", and "the" include the plural forms as well, unless the context clearly indicates otherwise. It will be further understood that the terms "comprises/including" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms, including technical and scientific terms, used herein have the same meaning as commonly understood by one of ordinary skill in the art to which this disclosure pertains. Terms, such as those defined in commonly used dictionaries, are to be interpreted as having a meaning that is consistent with their meaning in the context of the relevant art and are not to be interpreted in an idealized or overly formal sense unless expressly so defined herein.

Hereinafter, embodiments will be described in detail with reference to the accompanying drawings. When describing the examples with reference to the accompanying drawings, like reference numerals refer to like elements and a repeated description related thereto will be omitted.

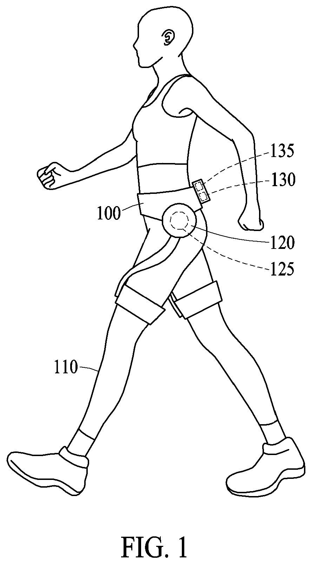

FIG. 1 is a diagram illustrating an overview of a wearable device worn on a user's body, according to an embodiment.

Referring to FIG. 1, a wearable device 100 may be a device worn on a body of a user 110 to assist the user 110 in walking, exercising, and/or working. In an embodiment, the wearable device 100 may be used to measure a physical ability (e.g., a walking ability, an exercise ability, or an exercise posture) of the user 110. In the embodiments, the term "wearable device" may be replaced with a "wearable robot," a "walking assistance device," or an "exercise assistance device". The user 110 may be a human or an animal, but examples are not limited thereto. The wearable device 100 may be worn on the body (e.g., a lower body (legs, ankles, knees, etc.) or a waist) of the user 110 and apply an external force, such as an assistance force and/or a resistance force, to body motion of the user 110. The assistance force may be a force assisting the body motion of the user 110, which is applied in the same direction as a direction of the body motion of the user 110. The resistance force may be a force impeding the body motion of the user 110, which is applied in an opposite direction to the direction of the body motion of the user 110. The term "resistance force" may be also referred to as an "exercise load".

In an embodiment, the wearable device 100 may operate in a walking assistance mode for assisting the walking of the user 110. In the walking assistance mode, the wearable device 100 may assist the walking of the user 110 by applying an assistance force generated through a driving module 120 of the wearable device 100 to the body of the user 110. The wearable device 100 may expand a walking ability of the user 110 by allowing the user 110 to walk independently or walk for a long time by providing a force needed for the walking of the user 110. The wearable device 100 may also improve the walking of a user having an abnormal walking habit or posture.

In an embodiment, the wearable device 100 may operate in an exercise assistance mode to enhance the effect of an exercise on the user 110. In the exercise assistance mode, the wearable device 100 may impede the body motion of the user 110 or resist against the body motion of the user 110 by applying a resistance force generated through the driving module 120 of the wearable device 100 to the body of the user 110. When the wearable device 100 is a hip-type wearable device worn on the waist (or pelvis) of the user 110 and the legs (e.g., thighs) of the user 110, the wearable device 100 worn on the legs of the user 110 may enhance the effect of an exercise on the legs of the user 110 by providing an exercise load to the motion of the legs of the user 110. Alternatively, the wearable device 100 may apply an assistance force to the body of the user 110 to assist the exercise of the user 110. For example, when a person with disabilities or an elderly person wears the wearable device 100 to exercise, the wearable device 100 may provide an assistance force to assist body motion in an exercise process. In an embodiment, the wearable device 100 may provide a combination of an assistance force and a resistance force by exercise sessions or time intervals, for example, providing an assistance force in one exercise session and a resistance force in another exercise session.

In an embodiment, the wearable device 100 may operate in a physical ability measurement mode to measure the physical ability of the user 110. The wearable device 100 may measure motion information of the user 110 by using sensors (e.g., an angle sensor 125 or an inertia sensor 135 (or an inertia measurement unit (IMU)) included by the wearable device 100 while the user 110 performs walking or exercise and evaluate a physical ability of the user 110 based on the measured motion information. For example, a gait index or an exercise ability indicator (e.g., muscular strength, endurance, balance, or exercise motion) of the user 110 may be estimated through the motion information of the user 110 measured by the wearable device 100. The physical ability measurement mode may include an exercise motion measurement mode to measure exercise motion of a user.

In certain example embodiments, for convenience of description, the wearable device 100 is described as an example of a hip-type wearable device, as illustrated in FIG. 1, but embodiments are not limited thereto. As described above, the wearable device 100 may be worn on body parts (e.g., upper arms, lower arms, hands, calves, or feet) other than a waist and legs (specifically, thighs), and the shape and configuration of the wearable device 100 may vary depending on the body parts on which the wearable device 100 is worn.

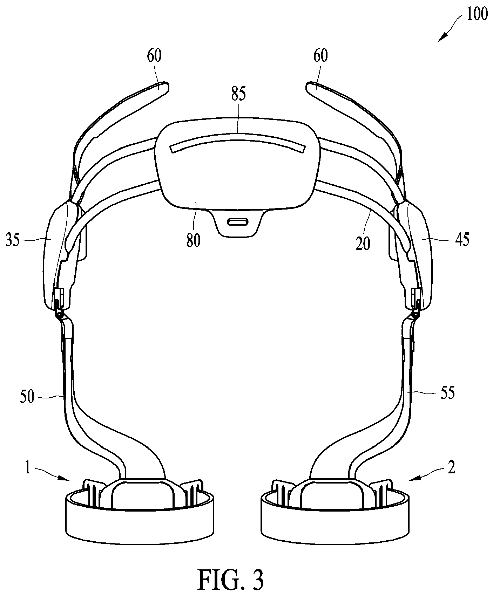

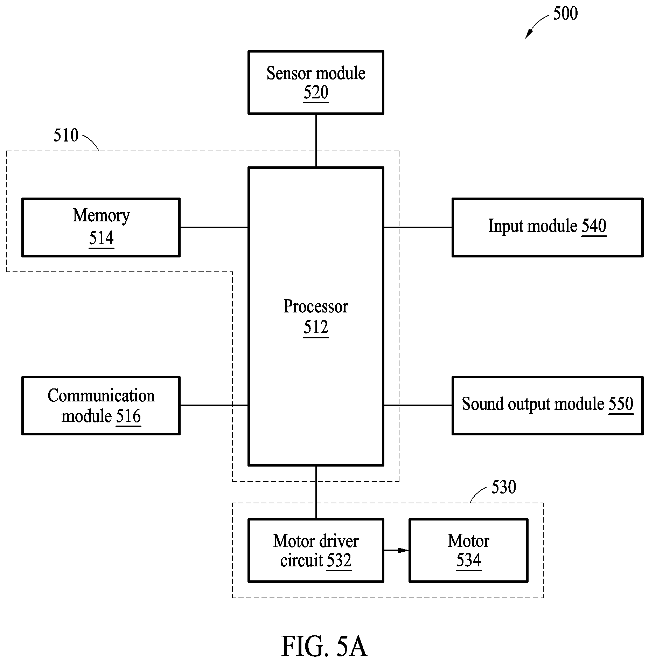

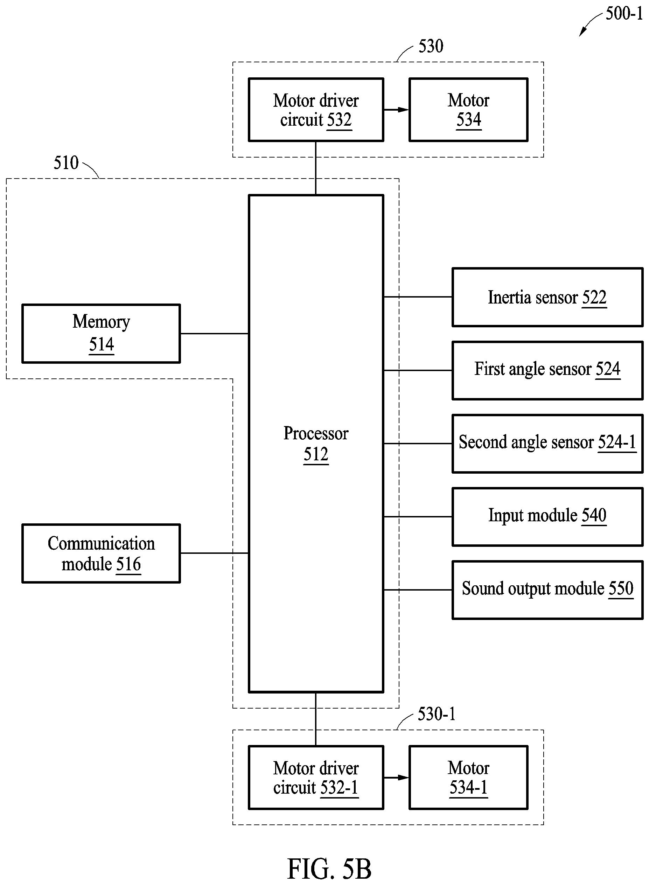

In an embodiment, the wearable device 100 may include a support frame (e.g., a waist support frame 20, as shown in Figs. 3-4) for supporting the body of the user 110 when the wearable device 100 is worn on the body of the user 110, the driving module 120 (e.g., driving modules 35 and 45 of FIG. 3) for generating torque applied to the legs of the user 110, a leg driving frame (e.g., first and second leg driving frames 55 and 50 of FIG. 3) for relaying the torque generated by the driving module 120 to the legs of the user 110, a sensor module (e.g., a sensor module 520 of FIG. 5A) including one or more sensors for obtaining sensor data including motion information on the body motion (e.g., leg motion or upper body motion) of the user 110, and a control module 130 (e.g., a control module 510 of FIGS. 5A and 5B) for controlling the wearable device 100.

The sensor module may include the angle sensor 125 and the inertia sensor 135. The angle sensor 125 may measure a rotation angle of the leg driving frame of the wearable device 100 corresponding to a hip joint angle value of the user 110. The rotation angle of the leg driving frame measured by the angle sensor 125 may be estimated as the hip joint angle value (or a leg angle value) of the user 110. The angle sensor 125 may include, for example, an encoder and/or a hall sensor. In an embodiment, the angle sensor 125 may be near a position where a motor included by the driving module 120 is connected to the leg driving frame. The inertia sensor 135 may include an acceleration sensor and/or an angular velocity sensor and measure changes of acceleration and/or angular velocity according to the motion of the user 110. The inertia sensor 135 may measure a motion value of a base body (e.g., a base body 80 of FIG. 3) or the waist support frame of the wearable device 100, for example. The motion value of the base body or the waist support frame measured by the inertia sensor 135 may be estimated as an upper body motion value of the user 110.

In an embodiment, the control module 130 and the inertia sensor 135 may be inside the base body (e.g., the base body 80 of FIG. 3) of the wearable device 100. The base body may be on the waist (or a lumbar region) of the user 110 when the user 110 wears the wearable device 100. The base body may be formed on or attached to the outside of the waist support frame of the wearable device 100.

The user 110, to use the wearable device 100, may fix the wearable device 100 to the body of the user 110 by wearing the wearable device 100. The user 110 may wear the wearable device 100 to fit the body of the user 110 through a fastener including a belt and/or a band of the wearable device 100. For example, when wearing the wearable device 100, the user 110 may fasten a waist fastener of the wearable device 100 to fit the waist size of the user 110 and fasten both thigh fasteners of the wearable device 100 to fit the size of both thighs of the user 110. When the wearable device 100 worn on the body of the user 110 fits the body size of the user 110, an external force (or torque) generated by the wearable device 100 may be accurately and efficiently relayed to the body of the user 110, and a safe operation of the wearable device 100 may be ensured.

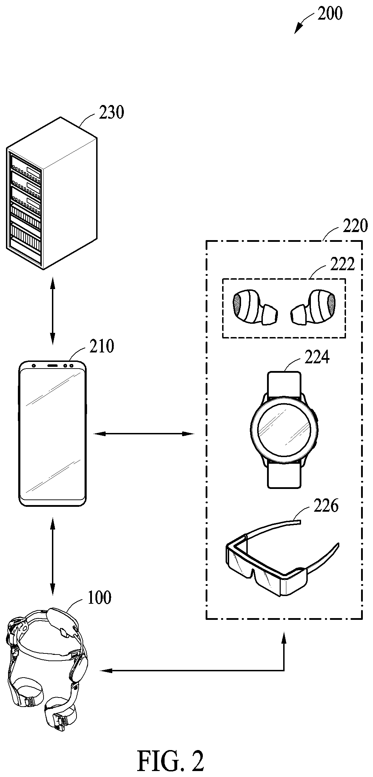

When the user 110 intends to use the wearable device 100, the user 110 may generally input a control command to drive the wearable device 100 while wearing the wearable device 100. For example, the user 110 may drive the wearable device 100 by pressing a separate button included by the wearable device 100 or inputting a driving command to an application of an electronic device (e.g., an electronic device 210 of FIG. 2) interoperating with the wearable device 100. When the user 110 desires to stop using the wearable device 100 while using the wearable device 100, the user 110 may input a control command to stop the driving of the wearable device 100 and turn the power of the wearable device 100 off. When an abnormal process is detected during control processes of such a wearable device, a typical wearable device may perform an operation not desired by a user. For example, when the user drives the typical wearable device while the user is not completely wearing the typical wearable device, or the user releases a fastening part without stopping an operation of the typical wearable device by mistake while the user uses the typical wearable device, the typical wearable device may continue to be driven without recognizing such a non-wear situation. In this case, a frame to which torque of the typical wearable device is relayed may move separately from the body of the user, and the user may get hurt by the moving frame.

According to various embodiments, the wearable device 100 may provide a wear detection function to detect whether the wearable device 100 is properly worn on the body of the user 110. The control module 130 is configured to perform a test to determine whether the wearable device 100 is normally worn on the body (e.g., legs) of the user 110 in a situation in which the wear detection function is needed to be performed. The wearable device according to the invention performs a test for proper wear that is distinguished from the general actuation tests of the prior art. The control module of the present invention is specifically configured to control the driving module to generate test torque to induce a 'shake motion' in the leg driving frame. This test torque has a specific pattern, for instance a periodic change in torque value. This implementation provides a more targeted and comfortable diagnostic for the user. The control module 130 may control the driving module 120 to generate specific test torque in the test. Test torque may generate shake motion in the leg driving frame and/or the waist support frame of the wearable device 100. In an embodiment, the test torque may generate shake motion in at least one of a first leg driving frame for supporting the right leg of the user 110, a second leg driving frame for supporting the left leg of the user 110, and the waist support frame for supporting the waist of the user 110. The control module 130 may determine a worn state of the wearable device 100 by analyzing sensor data obtained from when the test torque is relayed to the leg driving frame. The sensor data may include motion information of each component (e.g., the first leg driving frame, the second leg driving frame, or the waist support frame) of the wearable device 100 in response to the shake motion.

If the user 110 properly wears the wearable device 100, no or slight motion change of the leg driving frame may be found in sensor data obtained when shake motion is generated in the leg driving frame. If the user 110 does not wear the wearable device 100 at all or does not properly wear the wearable device 100, a great motion change of the leg driving frame may be found in the sensor data obtained when the shake motion is generated in the leg driving frame. The control module 130 may determine whether the wearable device 100 is normally worn on the body of the user 110 based on a degree of a motion change found in such sensor data. The test may be determined to be passed when being in a normally worn state is determined, and the test may be determined not to be passed when not being in a normally worn state is determined.

In various embodiments, the determining of the wearable device 100 being normally worn on the body of the user 110 may indicate that the wearable device 100 is properly worn on the body of the user 110. The determining of the wearable device 100 not being normally worn on the body of the user 110 may include both a state in which the wearable device 100 is not worn by the user 110 at all and a state in which the wearable device 100 is not properly worn on the body of the user 110.

In an embodiment, the control module 130 may drive the wearable device 100 when the wearable device 100 is determined to be normally worn on the body of the user 110 and may not drive the wearable device 100 or stop the driving of the wearable device 100 when the wearable device 100 is determined not to be normally worn on the body of the user 110. In an embodiment, the control module 130 may induce the user 110 to properly wear the wearable device 100 by providing a guide notification when the wearable device 100 is determined not to be normally worn on the body of the user 110. In an embodiment, the guide notification may be provided to the user 110 in such forms as voice guidance output from the wearable device 100 or a notification message output by the electronic device interoperating with the wearable device 100. By such control of the control module 130, the wearable device 100 may decrease a risk of the user 110 getting hurt as described above by preventing or reducing the wearable device 100 from moving when the wearable device 100 is not properly worn on the body of the user 110.

The connecting of hardware components may be limited or may not be readily available for components, such as a fastener including a band or a belt. The wearable device 100 may actively move the leg driving frame through test torque and may effectively perform a test to determine whether the wearable device 100 is normally worn without connecting the hardware components to the fastener by determining whether the wearable device 100 is properly worn by the user 110 based on a motion degree of the leg driving frame represented by sensor data.

FIG. 2 is a diagram illustrating a management system including a wearable device and an electronic device, according to an embodiment.

Referring to FIG. 2, a management system 200 may include a wearable device 100, an electronic device 210, other wearable devices 220, and a server 230. In an embodiment, at least one (e.g., the other wearable devices 220 or the server 230) of the components of the management system 200 may be omitted or one or more other devices (e.g., a controller device dedicated for the wearable device 100) may be added.

In an embodiment, the wearable device 100 worn on a body of a user may assist motion of the user in a walking assistance mode. For example, the wearable device 100 worn on the user's legs may assist the user in walking by generating an assistance force to assist the motion of the user's legs.

In an embodiment, to enhance the effect of an exercise on the user in an exercise assistance mode, the wearable device 100 may generate a resistance force to impede body motion of the user or an assistance force to assist the body motion of the user and apply such a force to the body of the user. In the exercise assistance mode, through the electronic device 210, the user may select an exercise program (e.g., squat, split lunge, dumbbell squat, lunge and knee up, stretching, etc.) that the user desires to do for exercise by using the wearable device 100 and/or exercise intensity to be applied to the wearable device 100. The wearable device 100 may control a driving module of the wearable device 100 according to the exercise program selected by the user and obtain sensor data including motion information of the user through a sensor module. The wearable device 100 may adjust the intensity of a resistance force or an assistance force applied to the user according to the exercise intensity selected by the user. For example, the wearable device 100 may control the driving module to generate a resistive force corresponding to the exercise intensity selected by the user.

In an embodiment, the wearable device 100 may be used to measure a physical ability of the user by interoperating with the electronic device 210. The wearable device 100 may operate in a physical ability measurement mode, that is, a mode for measuring the physical ability of the user, by control of the electronic device 210 and may transmit sensor data obtained through the motion of the user in the physical ability measurement mode to electronic device 210. The electronic device 210 may evaluate the physical ability of the user by analyzing the sensor data received from the wearable device 100.

The electronic device 210 may communicate with the wearable device 100 and may remotely control the wearable device 100 or provide the user with state information on a state (e.g., a booting state, a charging state, a sensing state, or an error state) of the wearable device 100. The electronic device 210 may receive the sensor data obtained by the sensor module of the wearable device 100 from the wearable device 100 and estimate an exercise result or the physical ability of the user based on the received sensor data. The electronic device 210 may provide the user with the exercise result or the physical ability of the user through a graphical user interface (GUI).

In an embodiment, the user may execute a program (e.g., an application) in the electronic device 210 to control the wearable device 100 and may adjust torque intensity output from the driving module (e.g., driving modules 35 and 45 of FIG. 3), audio intensity output from a sound output module (e.g., a sound output module 550 of FIGS. 5A and 5B), and brightness of a lighting unit (e.g., a lighting unit 85 of FIG. 3), based on a set value or an operation of the wearable device 100 through the program. The program executed by the electronic device 210 may provide a GUI for interaction with the user. The electronic device 210 may be a device in various forms. For example, the electronic device 210 may include a portable communication device (e.g., a smartphone), a computer device, an access point, a portable multimedia device, or a home appliance (e.g., a television, an audio device, or a projector device), but examples are not limited to the foregoing devices.

In an embodiment, the electronic device 210 may be connected to the server 230 by using short-range wireless communication or cellular communication. The server 230 may receive user profile information of the user of the wearable device 100 from the electronic device 210 and store and manage the received user profile information. The user profile information may include, for example, at least one of a name, an age, a gender, a height, a weight, and a body mass index (BMI). The server 230 may receive exercise history information on an exercise performed by the user from the electronic device 210 and may store and manage the received exercise history information. The server 230 may provide the electronic device 210 with various exercise programs or physical ability measurement programs to be provided to the user.

In an embodiment, the wearable device 100 and/or the electronic device 210 may be connected to the other wearable devices 220. The other wearable devices 220 may include, for example, wireless earphones 222, a smartwatch 224, or smart glasses 226, but examples are not limited to the foregoing devices. In an embodiment, the smartwatch 224 may measure a biosignal including heart rate information of the user and may transmit the measured biosignal to the electronic device 210 and/or the wearable device 100. The electronic device 210 may estimate the heart rate information (e.g., a current heart rate, a maximum heart rate, or an average heart rate) of the user based on the biosignal received from the smartwatch 224 and provide the estimated heart rate information to the user.

In an embodiment, exercise result information, physical ability information, and/or exercise motion evaluation information of the user that are determined by the electronic device 210 may be transmitted to the other wearable devices 220 and provided to the user through the other wearable devices 220. The state information of the wearable device 100 may be transmitted to the other wearable devices 220 and provided to the user through the other wearable devices 220. In an embodiment, the wearable device 100, the electronic device 210, and the other wearable devices 220 may be connected to one another through wireless communication (e.g., Bluetooth^{™} or wireless fidelity (Wi-Fi) communication).

In an embodiment, the wearable device 100 may provide (or output) feedback (e.g., visual, auditory, or tactile feedback) corresponding to the state of the wearable device 100 according to a control signal received from the electronic device 210. For example, the wearable device 100 may provide the visual feedback through the lighting unit (the lighting unit 85 of FIG. 3) and the auditory feedback through the sound output module (e.g., the sound output module 550 of FIGS. 5A and 5B).

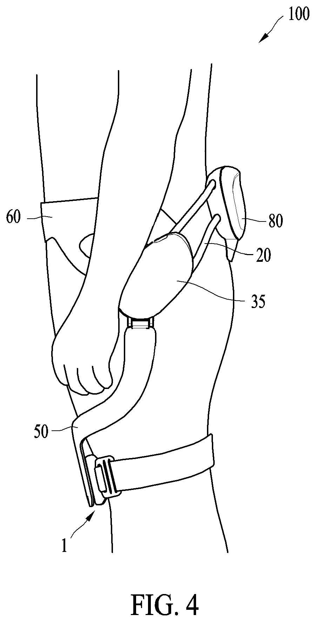

FIG. 3 is a rear schematic diagram illustrating a wearable device according to an embodiment. FIG. 4 is a left side view illustrating the wearable device according to an embodiment.

Referring to FIGS. 3 and 4, a wearable device 100 may include a base body 80, a waist support frame 20, driving modules 35 and 45, first and second leg driving frames 55 and 50, first and second thigh fasteners 2 and 1, and a waist fastener 60. The base body 80 may include a lighting unit 85. In an embodiment, at least one (e.g., the lighting unit 85) of the components may be omitted from the wearable device 100, or one or more other components may be added to the wearable device 100.

The base body 80 may be on the waist of a user when the user wears the wearable device 100. The base body 80 worn on the waist of the user may cushion the waist of the user and support the waist of the user. The base body 80 may be above a hip of the user when the user wears the wearable device 100 such that the wearable device 100 may not be deviated downward by gravity. The base body 80 may distribute some of a weight of the wearable device 100 to the waist of the user while wearing the wearable device 100. The base body 80 may be connected to the waist support frame 20. Waist support frame connection elements (not shown) which may be connected to the waist support frame 20 may be at both edges of the base body 80.

In an embodiment, the lighting unit 85 may be on the outer surface of the base body 80. The lighting unit 85 may include a light source (e.g., light emitting diode (LED)). The lighting unit 85 may emit light by control of a processor (not shown) (e.g., a processor 512 of FIGS. 5A and 5B). According to embodiments, the processor may control the lighting unit 85 to provide (or output) visual feedback corresponding to the state of the wearable device 100.

The waist support frames 20 may support the body (e.g., the waist) of the user when the wearable device 100 is worn on the body of the user. The waist support frame 20 may extend from both edges of the base body 80. The waist of the user may be accommodated inside the waist support frame 20. The waist support frame 20 may include one or more rigid body beams. Each beam may be a curved shape with a preset curvature such that the beam may enclose the user's waist. A waist fastener 60 may be connected to an edge of the waist support frame 20. The driving modules 35 and 45 may be connected, directly or indirectly, to the waist support frame 20.

In an embodiment, the processor, a memory, an IMU (e.g., the inertia sensor 135 of FIG. 1 or an inertia sensor 522 of FIG. 5B), a communication module (e.g., a communication module 516 of FIGS. 5A and 5B), a sound output module (e.g., the sound output module 550 of FIGS. 5A and 5B) and a battery (not shown) may be inside the base body 80. The base body 80 may protect the components inside the base body 80. The processor may generate a control signal to control an operation of the wearable device 100. The processor may control an actuator of the driving modules 35 and 45. The processor and the memory may be included by a control circuit. The control circuit may further include a power supply circuit to provide power of the battery to each component of the wearable device 100.

In an embodiment, the wearable device 100 may include a sensor module (not shown) (e.g., the sensor module 520 of FIG. 5A) for obtaining sensor data from one or more sensors. The sensor module may obtain the sensor data including motion information of the user and/or motion information of a component of the wearable device 100. The sensor module may include, for example, the IMU (e.g., the inertia sensor 135 or the inertia sensor 522 of FIG. 5B) for measuring an upper body motion value of the user or a motion value of the waist support frame 20 and an angle sensor (e.g., the angle sensor 125 of FIG. 1, a first angle sensor 524 of FIG. 5B, or a second angle sensor 524-1 of FIG. 5B) for measuring a hip joint angle value of the user or a motion value of the first and second leg driving frames 55 and 50, but examples are not limited thereto. For example, the sensor module may further include at least one of a position sensor, a temperature sensor, a biosignal sensor, and a proximity sensor.

The waist fastener 60 may be connected, directly or indirectly, to the waist support frame 20 and fix the waist support frame 20 to the waist of the user. The waist fastener 60 may include, for example, a pair of belts.

The driving modules 35 and 45 may generate an external force (or torque) to be applied to the body of the user based on the control signal generated by the processor. For example, the driving modules 35 and 45 may generate an assistance force or a resistance force to be applied to the user's legs. In an embodiment, the driving modules 35 and 45 may include a first driving module 45 in a position corresponding to a position of a right hip joint of the user and a second driving module 35 in a position corresponding to a position of a left hip joint of the user. The first driving module 45 may include a first actuator and a first joint member, and the second driving module 35 may include a second actuator and a second joint member. The first actuator may provide power to be relayed to the first joint member, and the second actuator may provide power to be relayed to the second joint member. The first actuator and the second actuator may respectively include motors (motors 534 and 534-1 of FIG. 5B, of driving modules 530 and 530-1, respectively) for generating power (or torque) by receiving power from the battery. When driven by receiving power, the motors may generate a force (an assistance force) to assist the body motion of the user or a force (a resistance force) to impede the body motion of the user. In an embodiment, the control module may adjust the intensity and direction of the power generated by the motors by adjusting a voltage and/or a current supplied to the motors.

In an embodiment, the first joint member and the second joint member may receive power respectively from the first actuator and the second actuator and may apply an external force to the body of the user based on the received power. The first joint member and the second joint member may respectively be at positions corresponding to joints of the user. A side of the first joint member may be connected, directly or indirectly, to the first actuator, and the other side of the first joint member may be connected, directly or indirectly, to the first leg driving frame 55. The first joint member may rotate by the power relayed from the first actuator. An encoder or a hall sensor that may operate as an angle sensor to measure a rotation angle (corresponding to a joint angle of the user) of the first joint member or the first leg driving frame 55 may be on a side of the first joint member. A side of the second joint member may be connected to the second actuator, and the other side of the second joint member may be connected to the second leg driving frame 50. The second joint member may rotate by the power relayed from the second actuator. An encoder or a hall sensor that may operate as an angle sensor to measure a rotation angle of the second joint member or the second leg driving frame 50 may be on a side of the second joint member.

In an embodiment, the first actuator may be in a lateral direction of the first joint member, and the second actuator may be in a lateral direction of the second joint member. A rotation axis of the first actuator and a rotation axis of the first joint member may be spaced apart from each other, and a rotation axis of the second actuator and a rotation axis of the second joint member may also be spaced apart from each other. However, examples are not limited to the foregoing examples, an actuator and a joint member may share a rotation axis. In an embodiment, actuators may respectively be spaced apart from joint members. In this case, the driving modules 35 and 45 may further include a power transmission module (not shown) for relaying power from the actuators to the joint members. The power transmission module may be a rotary body, such as a gear, or a longitudinal member, such as a wire, a cable, a string, a spring, a belt, or a chain. However, the scope of embodiments is not limited by a power relay structure and a positional relationship between the actuators and joint members described above.

In an embodiment, the first and second leg driving frames 55 and 50 may relay torque generated by the driving modules 35 and 45 to the body (e.g., the legs) of the user when the wearable device 100 is worn on the user's legs. The relayed torque may function as an external force applied to the motion of the user's legs. An edge of the first and second leg driving frames 55 and 50 may be connected, directly or indirectly, to a joint member and rotate, and the other edge of the leg driving frames 50 and 55 may be connected, directly or indirectly, to the first and second thigh fasteners 2 and 1 and relay the torque generated by the driving modules 35 and 45 to the user's thighs while supporting the user's thighs. For example, the first and second leg driving frames 55 and 50 may push or pull the user's thighs. The first and second leg driving frames 55 and 50 may extend in a longitudinal direction of the user's thighs. The first and second leg driving frames 55 and 50 may be bent to wrap around at least some of a circumference of the user's thighs. The first and second leg driving frames 55 and 50 may include the first leg driving frame 55 to relay torque to a right leg of the user and the second leg driving frame 50 to relay torque to a left leg of the user.

The first and second thigh fasteners 2 and 1 are respectively connected, directly or indirectly, to the first and second leg driving frames 55 and 50 and may fix the wearable device 100 to the user's legs (specifically, the thighs). For example, the first and second thigh fasteners 2 and 1 may include the first thigh fastener 2 to fix the wearable device 100 to a right thigh of the user and the second thigh fastener 1 to fix the wearable device 100 to a left thigh of the user.

In an embodiment, the first thigh fastener 2 may include a first cover, a first fastening frame, and a first strap, and the second thigh fastener 1 may include a second cover, a second fastening frame, and a second strap. The first and second covers may apply torque generated by the driving modules 35 and 45 to the user's thighs. The first and second covers may be at a side of the user's thighs to push or pull the user's thighs. The first and second covers may be on a front surface of the user's thighs. The first and second covers may be in a circumferential direction of the user's thighs. The first and second covers may extend to both sides around the other edge of the first and second leg driving frames 55 and 50 and may include curved surfaces corresponding to the user's thighs. An edge of the first and second covers may be connected, directly or indirectly, to a fastening frame and the other edge of the first and second covers may be connected, directly or indirectly, to a strap.

For example, the first and second fastening frames may enclose at least some of the circumference of the user's thighs to prevent or reduce the user's thighs from being separated from the wearable device 100. The first fastening frame may have a fastening structure that connects the first cover to the first strap, and the second fastening frame may have a fastening structure that connects the second cover to the second strap.

The first strap may enclose the rest of the circumference of the right thigh of the user, which the first cover and the first fastening frame do not enclose, and the second strap may enclose the rest of the circumference of the left thigh of the user, which the second cover and the second fastening frame do not enclose. The first and second straps may include, for example, an elastic material (e.g., a band).

FIGS. 5A and 5B are a configuration of a control system of a wearable device, according to an embodiment.

Referring to FIG. 5A, the wearable device (e.g., the wearable device 100) may be controlled by a control system 500. The control system 500 may include a control module 510 (comprising control circuitry, such as processing circuitry of the processor), a communication module 516 comprising communication circuitry, a sensor module 520 comprising at least one sensor, a driving module 530 comprising a motor and/or driver circuitry, an input module 540 comprising circuitry, and a sound output module 550. The driving module 530 may include a motor 534 to generate power (e.g., torque) and a motor driver circuit 532 to drive the motor 534. Although FIG. 5A illustrates the driving module 530 including one motor driver circuit 532 and one motor 534, the example of FIG. 5A is just an example. Referring to FIG. 5B, a control system 500-1 may include a plurality (two or more) of motor driver circuits (e.g., motor driver circuits 532 and 532-1) and motors (e.g., the motors 534 and 534-1). The driving module 530 including the motor driver circuit 532 and the motor 534 may correspond to the first driving module 45 of FIG. 3, and a driving module 530-1 including the motor driver circuit 532-1 and the motor 534-1 may correspond to the second driving module 35 of FIG. 3. The following descriptions of the motor driver circuit 532 and the motor 534 may also be respectively applicable to the motor driver circuit 532-1 and the motor 534-1 illustrated in FIG. 5B. Each "driving module" herein may comprise a motor and/or driver circuitry, for example as shown in Fig. 5A.

Referring to FIG. 5A, the sensor module 520 may include at least one sensor. The sensor module 520 may obtain sensor data including motion information of a user or motion information of the wearable device. The sensor module 520 may transmit the obtained sensor data to the control module 510 (comprising control circuitry, such as processing circuitry of the processor). The sensor module 520 may include an inertia sensor 522 and an angle sensor (e.g., a first angle sensor 524 and a second angle sensor 524-1) as illustrated in FIG. 5B. The inertia sensor 522 may sense an upper body motion value of the user. For example, the inertia sensor 522 may sense the acceleration and angular velocity of an X-axis, a Y-axis, and a Z-axis according to motion of the user. In addition, the inertia sensor 522 may obtain a motion value (e.g., an acceleration value and an angular velocity value) of a waist support frame of the wearable device. The angle sensor may sense a hip joint angle value according to motion of the user's legs. Sensor data that may be sensed by the angle sensor may include, for example, a hip joint angle value of a right leg, a hip joint angle value of a left leg, and information on a motion direction of the legs. A first angle sensor 524 of FIG. 5B may obtain the hip joint angle value of the right leg of the user and a second angle sensor 524-1 may obtain the hip joint angle value of the left leg of the user. The first angle sensor 524 and the second angle sensor 524-1 may each include, for example, an encoder and/or a hall sensor. In addition, the first and second angle sensors 524 and 524-1 may obtain a motion value of a leg driving frame of the wearable device. For example, the first angle sensor 524 may obtain a motion value of the first leg driving frame 55 and the second angle sensor 524-1 may obtain a motion value of the second leg driving frame 50.

In an embodiment, the sensor module 520 may further include a position sensor, a proximity sensor, a biosignal sensor, and a temperature sensor, in which the position sensor may obtain a position value of the wearable device, the proximity sensor may detect the proximity of an object, the biosignal sensor may detect a biosignal of the user, and the temperature sensor may sense an ambient temperature.

An input module 540 may receive a command or data to be used by another component (e.g., a processor 512) of the wearable device from the outside (e.g., the user) of the wearable device. The input module 540 may include, for example, a key (e.g., a button) or a touch screen.

A sound output module 550 may output a sound signal to the outside of the wearable device. The sound output module 550 may include a guide sound signal (e.g., a driving start sound or an operation error notification sound) and a speaker for playing music content or a guide voice.

In an embodiment, the control system 500 may include a battery (not shown) to supply power to each component of the wearable device. The wearable device may convert the power of the battery into power suitable for an operating voltage of each component of the wearable device and supply the converted power to each component.

The driving module 530 may generate an external force to be applied to the user's legs by control of the control module 510. The driving module 530 may be in a position corresponding to a position of a hip joint of the user and may generate torque to be applied to the user's legs based on a control signal generated by the control module 510. The control module 510 may transmit the control signal to the motor driver circuit 532, and the motor driver circuit 532 may control an operation of the motor 534 by generating a current signal (or a voltage signal) corresponding to the control signal and supplying the current signal (or the voltage signal) to the motor 534. The current signal may not be supplied to the motor 534 according to the control signal. When the current signal is supplied to the motor 534, and the motor is driven, the motor 534 may generate a force to assist leg motion of the user or torque to impede the leg motion of the user.

The control module 510 may control an overall operation of the wearable device and may generate a control signal to control each component (e.g., the driving module 530). The control module 510 may include a processor 512 and a memory 514.

The processor 512 may execute, for example, software to control at least one other component (e.g., a hardware or software component) of the wearable device connected, directly or indirectly, to the processor 512 and may perform various types of data processing or operations. In an embodiment, as at least a part of data processing or operations, the processor 512 may store instructions or data received from another component (e.g., the communication module 516) in the memory 514, process the instructions or the data stored in the memory 514, and store result data after the processing in the memory 514. In an embodiment, the processor 512 may include a main processor (e.g., a central processing unit (CPU) or an application processor (AP)) or an auxiliary processor (e.g., a graphics processing unit (GPU), a neural processing unit (NPU), an image signal processor (ISP), a sensor hub processor, or a communication processor (CP)) that is operable independently of or in conjunction with the main processor. The auxiliary processor may be implemented separately from the main processor or as a part of the main processor.

The memory 514 may store various pieces of data used by at least one component (e.g., the processor 512) of the control module 510. The various pieces of data may include, for example, software, sensor data, input data or output data for instructions related thereto. The memory 514 may include a volatile memory or a non-volatile memory (e.g., a random-access memory (RAM), a dynamic RAM (DRAM), or a static RAM (SRAM)).

The communication module 516 may support establishing a direct (e.g., wired) communication channel or a wireless communication channel between the control module 510 and another component of the wearable device or an external electronic device (e.g., the electronic device 210 or the other wearable devices 220 of FIG. 2) and performing communication via the established communication channel. For example, the communication module 516 may transmit the sensor data obtained by the sensor module 520 to the external electronic device (e.g., the electronic device 210 of FIG. 2) and receive a control signal from the external electronic device. In an embodiment, the communication module 516 may include one or more CPs that are operable independently of the processor 512 and that support direct (e.g., wired) communication or wireless communication. In an embodiment, the communication module 516 may include a wireless communication module (e.g., a cellular communication module, a short-range wireless communication module, or a global navigation satellite system (GNSS) communication module) and/or a wired communication module. A corresponding one of these communication modules may communicate with the other component of the wearable device and/or the external electronic device via a short-range communication network, such as Bluetooth^{™}, Wi-Fi, an ANT or infrared data association (IrDA), or a long-range communication network, such as a legacy cellular network, a 5G network, a next-generation communication network, the Internet, or a computer network (e.g., a local area network (LAN) or a wide region network (WAN).

In an embodiment, the wearable device 100 may include the driving module 530 for generating torque applied to the user's body, the first and second leg driving frames 55 and 50 for relaying the generated torque to the user's legs, the first and second thigh fasteners 2 and 1 that are respectively connected, directly or indirectly, to the first and second leg driving frames 55 and 50 and for fixing the first and second leg driving frames 55 and 50 respectively to the user's legs, the sensor module 520 for obtaining sensor data including motion information of the first and second leg driving frames 55 and 50, and the control module 510 for controlling the wearable device 100 based on the sensor data. The first and second leg driving frames 55 and 50 may include the first leg driving frame 55 to relay torque to the right leg of the user and the second leg driving frame 50 to relay torque to the left leg of the user. The wearable device 100 may further include the waist support frame 20 for supporting the user's waist. The sensor module 520 may include, for example, the inertia sensor 522 and an angle sensor (e.g., the first angle sensor 524 and the second angle sensor 524-1), in which the inertia sensor 522 may obtain a motion value of the waist support frame 20 of the wearable device 100 and the angle sensor may obtain respective motion values of the first and second leg driving frames 55 and 50.

The control module 510 may perform a test to determine whether the wearable device 100 is normally worn on the user's body (e.g., the legs). In an embodiment, the control module 510 may perform the test in response to receiving a user input including a driving command for the wearable device 100. For example, the control module 510 may perform the test when the user inputs the driving command through the input module 540 or in response to receiving a control signal including the driving command from an electronic device (e.g., the electronic device 210).

In an embodiment, the control module 510 may perform the test before starting an operation for a walking assistance mode or an exercise assistance mode of the wearable device 100. For example, the control module 510 may perform the test when the user selects the walking assistance mode or the exercise assistance mode of the wearable device 100 through an application of the electronic device and attempts to start the selected operation mode.

In an embodiment, the control module 510 may perform the test in response to entering a standby mode after terminating the walking assistance mode or the exercise assistance mode of the wearable device 100. For example, the control module 510 may operate in the standby mode after terminating the walking assistance mode or the exercise assistance mode during the operation thereof when an operation of the user stops for a certain time. In this case, the control module 510 may determine whether the wearable device 100 is normally worn on the user's body by performing the test. In an embodiment, the control module 510 may perform the test when the operation mode of the wearable device 100 changes between the walking assistance mode and the exercise assistance mode, or the types of exercise performed by the user change (for example, when the user attempts to start exercise of higher intensity).

In the test, the control module 510 may control a driving module (e.g., the driving module 530 or the driving module 530-1) to generate test torque. In accordance with the invention, the test torque has a torque value pattern to generate shake motion in the first and second leg driving frames 55 and 50 and/or the waist support frame 20 of the wearable device 100. The test torque may have, for example, a pattern where a torque value changes periodically within a certain range of torque values. The test torque may have a torque value pattern in a vibrating form. The test torque applied to the test may be variously modified or set. In an embodiment, the control module 510 may determine at least one of a moving direction (e.g., a front direction, a rear direction, or back and forth between the front and rear directions) of the first and second leg driving frames 55 and 50 and/or the waist support frame 20 to which the test torque is applied based on a user set value according to selection of the user, the intensity (a maximum intensity of a torque value) of the test torque, and an application pattern (e.g., a vibration interval, the number of repetitions, or a change of torque intensity over time) of the test torque.

In an embodiment, the driving modules 530 and 530-1 may generate test torque to induce shake motion in at least one of the first and second leg driving frames 55 and 50 by control of the control module 510. For example, the driving modules 530 and 530-1 may generate the test torque such that at least one of the first leg driving frame 55 and the second leg driving frame 50 moves in a front or rear direction of the wearable device 100 by control of the control module 510. As another example, the driving modules 530 and 530-1 may generate the test torque such that at least one of the first leg driving frame 55 and the second leg driving frame 50 moves back and forth between the front and rear directions of the wearable device 100 by control of the control module 510. The front direction of the wearable device 100 may be a direction corresponding to a front direction of the user or flexion motion of the legs, and the rear direction of the wearable device 100 may be a direction corresponding to a rear direction of the user or extension motion of the legs.

In an embodiment, the driving modules 530 and 530-1 may generate the test torque such that the first leg driving frame 55 and the second leg driving frame 50 move in the same direction (e.g., the front or rear direction) by control of the control module 510, and the test torque may generate shake motion of the waist support frame 20.

The control module 510 may determine whether the test is passed based on the sensor data obtained by the sensor module 520 after the test torque is generated. The control module 510 may determine whether the wearable device 100 is normally worn on the user's body based on the sensor data.

In an embodiment, the control module 510 may determine whether the test is passed (or whether the wearable device 100 is normally worn) based on a change of a motion value of a leg driving frame obtained through an angle sensor (e.g., a hall sensor or an encoder) when moving the leg driving frame (e.g., the first leg driving frame 55, the second leg driving frame 50, and/or the waist support frame 20) of the wearable device 100 through the test torque in the front direction and/or the rear direction.

In an embodiment, the control module 510 may determine whether the test is passed based on a threshold value and the motion value of the leg driving frame obtained after the test torque is generated. For example, the control module 510 may determine that the test is passed in response to a maximum value of the motion value of the leg driving frame obtained after the test torque is generated being less than the threshold value (e.g., 10 degrees). The passing of the test may correspond to the wearable device 100 being normally worn on the user's body. The control module 510 may determine that the test is not passed in response to the maximum value of the motion value of the leg driving frame obtained after the test torque is generated being greater than or equal to the threshold value (e.g., 10 degrees). The failure to pass the test may correspond to the wearable device 100 not normally being worn on the user's body.

In an embodiment, the control module 510 may determine whether the test is passed based on a motion value of the waist support frame 20 obtained by the inertia sensor 522 after the test torque is generated. The control module 510 may detect motion of the user based on the motion value of the waist support frame 20, before performing the test to determine whether the wearable device 100 is normally worn on the user's body, and when the motion is detected, may perform the test.

In an embodiment, the control module 510 may determine whether the waist support frame 20 is normally worn on the user's body based on the motion value of the waist support frame 20 obtained after the test torque is generated to generate shake motion of the waist support frame 20. For example, the control module 510 may determine that the waist support frame 20 is properly worn on the user's body when a maximum value of the motion value of the waist support frame 20 obtained by the inertia sensor 522 is less than a threshold value in response to the shake motion of the waist support frame 20 and may determine that the waist support frame 20 is not properly worn on the user's body when the maximum value of the motion value of the waist support frame 20 is greater than or equal to the threshold value.

In an embodiment, the control module 510 may determine whether a wearable device is normally worn based on motion of a leg driving frame and/or motion of a waist support frame and a motion value obtained by an angle sensor (e.g., the first angle sensor 524 or the second angle sensor 524-1). For example, the control module 510 may determine that the wearable device 100 is properly worn on the user's body when there is no or slight change of a motion value of the leg driving frame in response to moving the leg driving frame through test torque. When the change of the motion value is greater than or equal to a reference value (e.g., a first threshold value), the control module 510 may determine that the wearable device 100 is not worn on the user's body. When the change of the motion value is within a reference range (e.g., between a second threshold value and the first threshold value, in which the second threshold value is less than the first threshold value), the control module 510 may determine that the wearable device 100 is not properly worn (poorly worn) on the user's body.

In an embodiment, in response to determining that the test is not passed (or determining that the wearable device 100 is not normally worn on the user's body), the control module 510 may provide the user with a guide notification to induce the normal wearing of the wearable device 100. For example, abnormal wearing may be notified to the user through the sound output module 550 or a guide voice or a notification sound to induce normal wearing. The guide notification may be provided to the user through an electronic device (e.g., the electronic device 210 of FIG. 2) interoperating with the wearable device 100 or another wearable device (e.g., the other wearable devices 220 of FIG. 2).

In an embodiment, in response to determining that the test is not passed (or determining that the wearable device 100 is not normally worn on the user's body), the control module 510 may repeatedly perform the test to determine whether the wearable device 100 is worn on the user's legs until the wearable device 100 is determined to be worn on the user's body based on the sensor data obtained by the sensor module 520. The control module 510 may start the driving of the wearable device 100 when determining, through the test, that the wearable device 100 is properly worn on the user's body.

Each embodiment herein may be used in combination with any other embodiment(s) described herein.

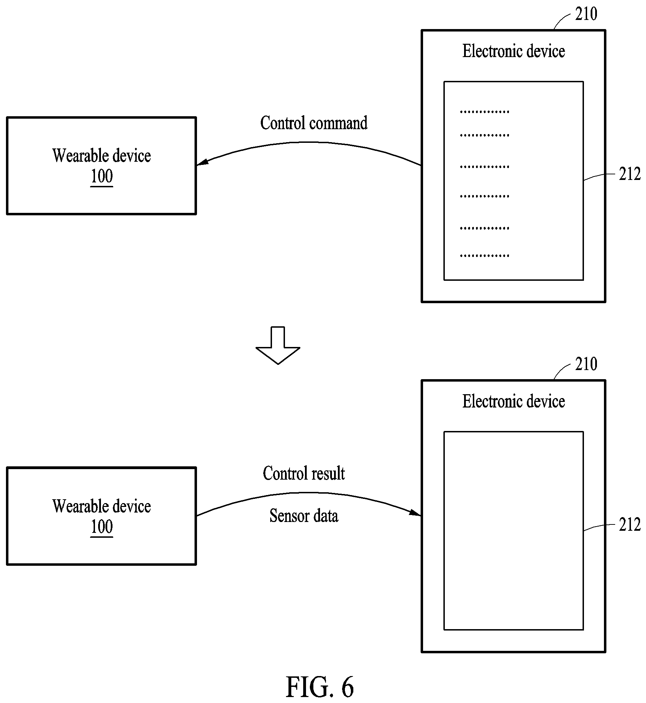

FIG. 6 is a diagram illustrating an interaction between a wearable device and an electronic device, according to an embodiment.

Referring to FIG. 6, a wearable device 100 may communicate with an electronic device 210. For example, the electronic device 210 may be a user terminal of a user using the wearable device 100 or a controller device dedicated for the wearable device 100. In an embodiment, the wearable device 100 and the electronic device 210 may be connected to each other through short-range wireless communication (e.g., Bluetooth^{™} or Wi-Fi communication).

In an embodiment, the electronic device 210 may check a state of the wearable device 100 or execute an application to control or operate the wearable device 100. A screen of a user interface (UI) may be displayed to control an operation of the wearable device 100 or determine an operation mode of the wearable device 100 on a display 212 of the electronic device 210 through the execution of the application. The UI may be, for example, a GUI.

In an embodiment, a user may input a command (e.g., a command to execute a walking assistance mode, an exercise assistance mode, or a physical ability measurement mode) to control the operation of the wearable device 100 or change a setting of the wearable device 100 through a GUI screen on the display 212 of the electronic device 210. The electronic device 210 may generate a control command (or a control signal) corresponding to an operation control command or setting change command input by the user and transmit the generated control command to the wearable device 100. The wearable device 100 may operate according to the received control command and transmit a control result according to the received control command and/or sensor data sensed by a sensor module of the wearable device 100 to the electronic device 210. The electronic device 210 may provide the user with result information (e.g., gait ability information, exercise ability information, or exercise motion evaluation information) derived by analyzing the control result and/or the sensor data through the GUI screen.

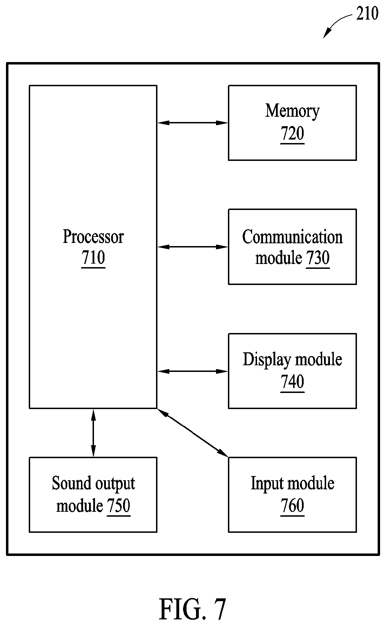

FIG. 7 is a diagram illustrating a configuration of an electronic device according to an embodiment.

Referring to FIG. 7, an electronic device 210 may include a processor 710, a memory 720, a communication module 730, a display module 740, a sound output module 750, and an input module 760. In an embodiment, at least one (e.g., the sound output module 750) of the components may be omitted from the electronic device 210, or one or more other components (e.g., a sensor module, a haptic module, and a battery) may be added to the electronic device 210.

The processor 710 may control at least one other component (e.g., a hardware or software component) of the electronic device 210 and may perform various types of data processing or operations. In an embodiment, as at least a part of data processing or operations, the processor 710 may store instructions or data received from another component (e.g., the communication module 730) in the memory 720, process the instructions or the data stored in the memory 720, and store result data in the memory 720.

In an embodiment, the processor 710 may include a main processor (e.g., a CPU or an AP) or an auxiliary processor (e.g., a GPU, an NPU, an ISP, a sensor hub processor, or a CP) that is operable independently of or in conjunction with the main processor.

The memory 720 may store various pieces of data used by at least one component (e.g., the processor 710 or the communication module 730) of the electronic device 210. The various pieces of data may include, for example, a program (e.g., an application) and input data or output data for a command related thereto. The memory 720 may include at least one instruction executable by the processor 710. The memory 720 may include a volatile memory or a non-volatile memory. Each processor herein comprises processing circuitry.

The communication module 730 may support establishing a direct (e.g., wired) communication channel or a wireless communication channel between the electronic device 210 and another electronic device (e.g., the wearable device 100, the other wearable devices 220, and the server 230) and performing communication via the established communication channel. The communication module 730 may include a communication circuit for performing a communication function. The communication module 730 may include one or more CPs that are operable independently of the processor 710 (e.g., an AP) nmmmband that support direct (e.g., wired) communication or wireless communication. In an embodiment, the communication module 730 may include a wireless communication module (e.g., a Bluetooth^{™} communication module, a cellular communication module, a Wi-Fi communication module, or a GNSS communication module) that performs wireless communication or a wired communication module (e.g., a LAN communication module or a power line communication (PLC) module). For example, the communication module 730 may transmit a control command to the wearable device 100 and receive, from the wearable device 100, at least one of sensor data including body motion information of a user wearing the wearable device 100, state data of the wearable device 100, and control result data corresponding to the control command.

The display module 740 may visually provide information to the outside (e.g., the user) of the electronic device 210. The display module 740 may include, for example, a light-emitting diode (LCD) or organic light-emitting diode (OLED) display, a hologram device, or a projector device. The display module 740 may further include a control circuit to control the driving of the display. In an embodiment, the display module 740 may further include a touch sensor set to sense a touch or a pressure sensor set to sense the intensity of a force generated by the touch. The display module 740 may output a UI screen to control the wearable device 100 or provide various pieces of information (e.g., exercise evaluation information or setting information of the wearable device 100).

The sound output module 750 may output a sound signal to the outside of the electronic device 210. The sound output module 750 may include a guide sound signal (e.g., a driving start sound or an operation error notification sound) based on a state of the wearable device 100 and a speaker for playing music content or a guide voice. For example, when the wearable device 100 is determined not to be normally worn on the user's body, the sound output module 750 may output the guide voice to notify the user of the abnormal wearing of the wearable device 100 or induce normal wearing.

The input module 760 may receive a command or data to be used by another component (e.g., the processor 710) of the electronic device 210 from the outside (e.g., the user) of the electronic device 210. The input module 760 may include an input component circuit and receive a user input. The input module 760 may include, for example, a touch recognition circuit for recognizing a touch on a key (e.g., a button) and/or a screen.

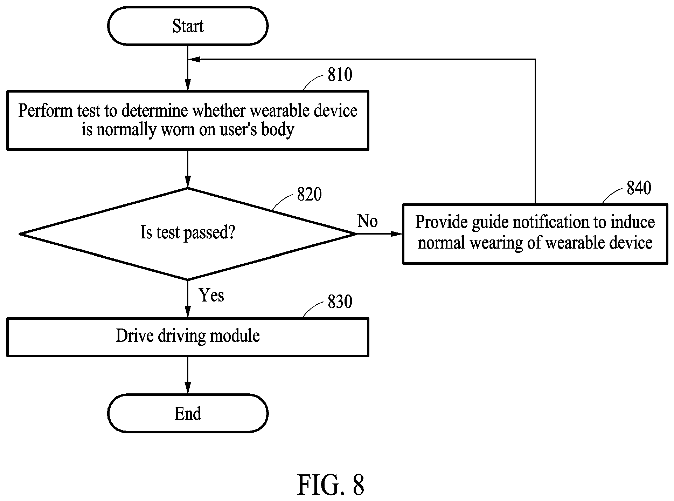

FIG. 8 is a flowchart illustrating an operating method of a wearable device, according to an embodiment. In an embodiment, at least one of operations of FIG. 8 may be simultaneously or parallelly performed with one another, and the order of the operations may be changed. In addition, at least one of the operations may be omitted or another operation may be additionally performed. In addition, control operations of FIG. 8 may be performed by a control module (e.g., the control module 130 or the control module 510, each comprising control/processing circuitry) of the wearable device 100.

Referring to FIG. 8, in operation 810, the wearable device 100 may perform a test to determine whether the wearable device 100 is normally worn on a user's body.

In an embodiment, the wearable device 100 may perform the test when the user presses a power button or a driving start button (or a driving restart button) of the wearable device 100.

In an embodiment, the wearable device 100 may perform the test when the user desires to start walking or exercising. For example, the wearable device 100 may perform the test when the user selects an exercise start in an application of the electronic device 210 or when an exercise to be performed is changed. The wearable device 100 may selectively perform the test on support frames according to the types of exercise that the user desires to perform. For example, when the user desires to perform a squat or lunge, the wearable device 100 may automatically perform the test on a waist support frame before performing an exercise mode for a squat or lunge.

The time when the wearable device 100 performs the test is not limited to the foregoing examples. The test may be performed during or after driving besides the time when the start of driving according to the use purpose of the user of the wearable device 100 is necessary. For example, in the case of an exercise (e.g., a split jack or mountain climbers) of which the number of repetitions of body motion and a range of the body motion are great, the wearable device 100 may automatically perform the test immediately after the end of the exercise.

The wearable device 100 may generate test torque through a driving module (e.g., the driving module 120, the driving module 530, and/or the driving module 530-1) of the wearable device 100 to perform the test. In an embodiment, the wearable device 100 may generate the test torque to induce shake motion in at least one of the first and second leg driving frames 55 and 50 or the waist support frame 20.

In an embodiment, the wearable device 100 may generate the test torque such that at least one of the first leg driving frame 55 of the wearable device 100 for relaying torque of the driving module to the user's right leg and the second leg driving frame 50 of the wearable device 100 for relaying the torque of the driving module to the user's left leg moves in a front or rear direction of the wearable device 100.

In accordance with the invention, the wearable device 100 generates the test torque such that at least one of the first leg driving frame 55 and the second leg driving frame 50 moves in a front or rear direction of the wearable device 100.

In an embodiment, the wearable device 100 may generate the test torque such that the first and second leg driving frames 55 and 50 move in the same direction (e.g., the front or rear direction).

The wearable device 100 may obtain sensor data including a motion value of the leg driving frame (e.g., first and second leg driving frames 55 and 50) of the wearable device 100 after the test torque is generated. For example, the wearable device 100 may obtain a motion value of each component (e.g., the first and second leg driving frames 55 and 50 or the waist support frame 20) of the wearable device 100 after the test torque is generated by using an angle sensor (e.g., the angle sensor 125, the first angle sensor 524, or the second angle sensor 524-1) of the wearable device 100 and/or an inertia sensor (e.g., the inertia sensor 135 or the inertia sensor 522) of the wearable device 100.

In operation 820, the wearable device 100 may determine whether the test is passed (or the wearable device 100 is normally worn on the user's body) based on the sensor data. In an embodiment, the wearable device 100 may determine whether the wearable device 100 is normally worn on the user's body based on a threshold value and the motion value of the leg driving frame (e.g., first and second leg driving frames 55 and 50) obtained after the test torque is generated. For example, the wearable device 100 may determine that the test is passed (or the wearable device 100 is normally worn on the user's body) when a maximum value of the motion value of the leg driving frame is less than the threshold value and determine that the test is not passed (or the wearable device 100 is not normally worn on the user's body) when the maximum value of the motion value of the leg driving frame is greater than or equal to the threshold value.

When the test is determined to be passed ('Yes' in operation 820), the wearable device 100, in operation 830, may drive the driving module 35/45 of the wearable device 100. The wearable device 100 may prevent or reduce chances of a safety issue which may occur in an abnormal wearing state by driving the driving module only after the wearable device 100 is verified to be normally worn on the user's body.

When the test is determined not to be passed ('No' in operation 820), the wearable device 100, in operation 840, may provide the user with a guide notification to induce normal wearing of the wearable device 100. For example, the wearable device 100 may notify the user of abnormal wearing or provide the user with a guide voice or a notification sound to induce normal wearing. Then, the wearable device 100 may perform the test again. The wearable device 100 may repeatedly perform the test until the wearable device 100 is determined to be normally worn on the user's body based on the sensor data obtained after the test torque is generated.

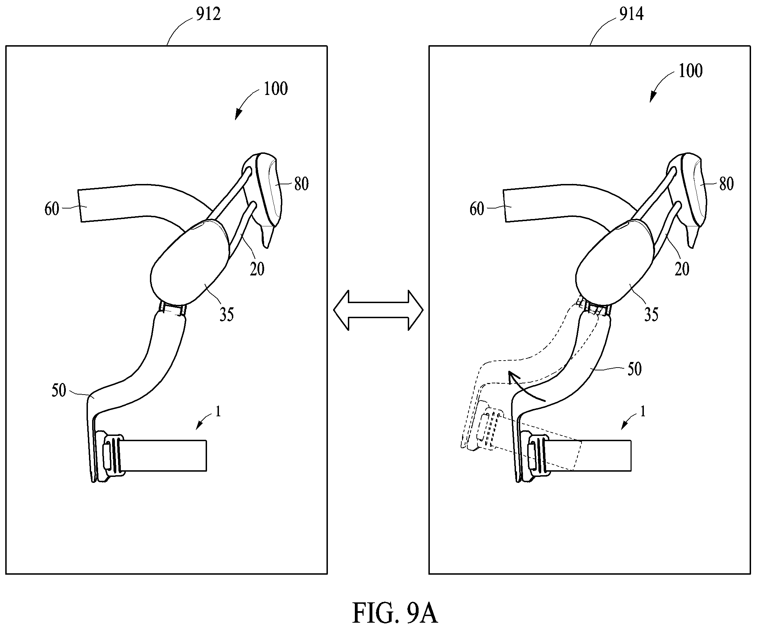

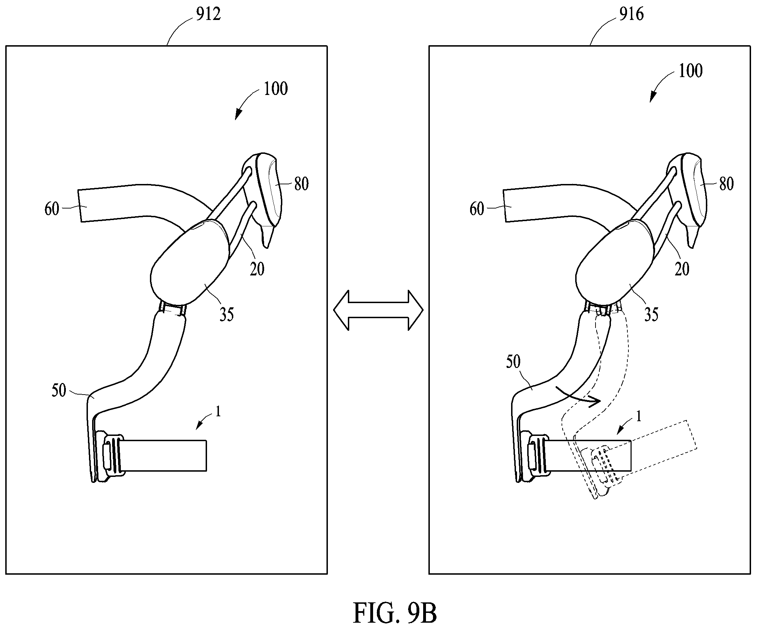

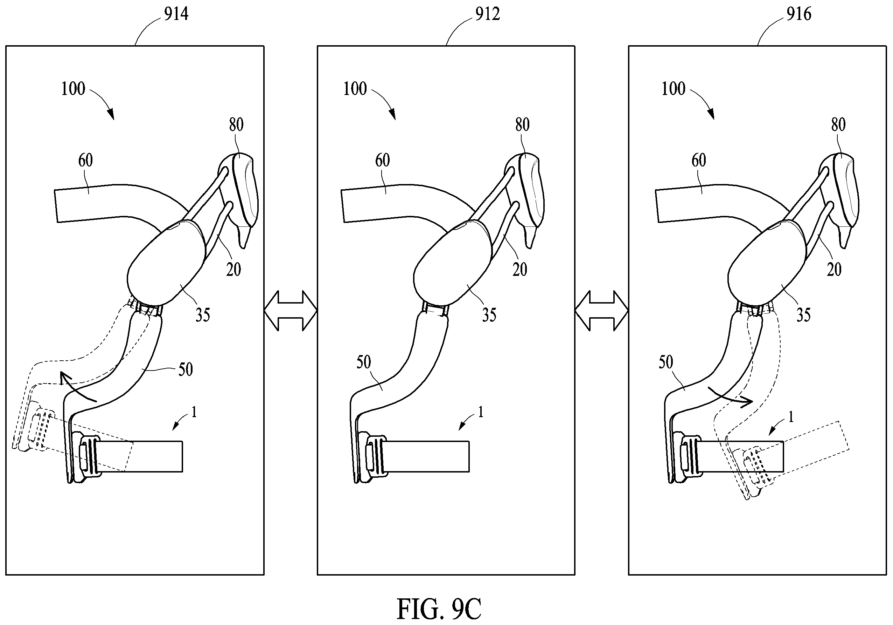

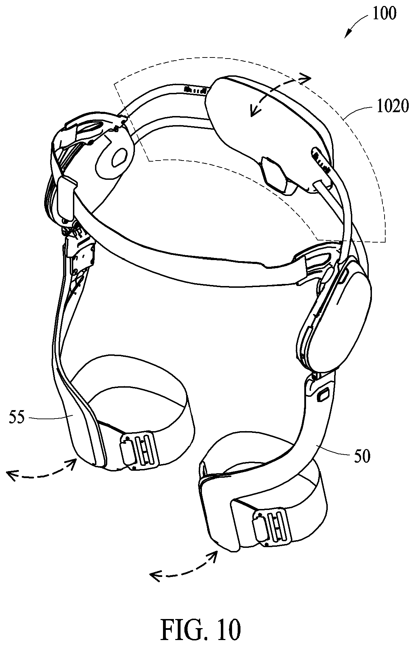

FIGS. 9A, 9B, 9C, and 10 are diagrams illustrating examples of performing a test to detect whether a wearable device is normally worn, according to an embodiment. FIGS. 9A, 9B, and 9C illustrate examples of generating shake motion through test torque in a second leg driving frame 50 of a wearable device 100.

Referring to FIG. 9A, the wearable device 100 may generate the test torque through a second driving module 35 to test whether a second thigh fastener 1 is properly worn or fastened on a left leg of a user in a first state 912 in which the test torque is not applied. In an embodiment, the second leg driving frame 50 may move in a front direction of the wearable device 100. The second leg driving frame 50 may move in the front direction of the wearable device 100 as in a second state 914 through the generation of the test torque. The wearable device 100 may apply the test torque such that the first state 912 and the second state 914 may repeat, and shake motion may be generated in the second leg driving frame 50 according to an application pattern of the test torque. The user may receive feedback that the second leg driving frame 50 wiggles.

Referring to FIG. 9B, the wearable device 100 may generate test torque such that the second leg driving frame 50 moves in a rear direction of the wearable device 100. The second leg driving frame 50 may move in the rear direction of the wearable device 100 as in a third state 916 through the test torque. The wearable device 100 may apply the test torque such that the first state 912 and the third state 916 may repeat, and shake motion may be generated in the second leg driving frame 50 according to an application pattern of the test torque.

Referring to FIG. 9C, the wearable device 100 may generate test torque such that the second leg driving frame 50 moves between the front and rear directions of the wearable device 100. The wearable device 100 may apply a test torque pattern such that the second leg driving frame 50 moves back and forth, for example, from the first state 912 to the second state 914 through the second state 914 to the first state 912 and to the second state 914.

The descriptions provided with reference to FIGS. 9A, 9B, and 9C may uniformly apply to the wearable device 100 generating from shake motion in the first leg driving frame 55 through test torque to test whether the first thigh fastener 2 is properly worn or fastened on a right leg of the user.

Referring to FIG. 10, the wearable device 100 may also generate shake motion in a waist support frame 1020 (e.g., the waist support frame 20) through test torque. The waist support frames 1020 may support a waist of the user when the wearable device 100 is worn. The wearable device 100 may generate shake motion in the first leg driving frame 55 and the second leg driving frame 50 in the same direction (e.g., the front direction or the rear direction) to determine whether the waist support frame 1020 is properly worn on the waist of the user. When the first leg driving frame 55 and the second leg driving frame 50 shake in the same direction, shake motion may be generated in the waist support frame 1020.

In an embodiment, the user may determine at least one of a direction (e.g., the front direction, the rear direction, or back and forth between the front and rear directions) of the test torque generated for the test to determine whether the wearable device 100 is normally worn on the user's body, the intensity (the maximum intensity of a torque value) of the test torque, and the application pattern (e.g., a vibration interval, the number of repetitions, a change of torque intensity over time, or an application time of the test torque) of the test torque.

In an embodiment, the shake motion of the first and second leg driving frames 55 and 50 and/or the waist support frame 1020 described above may be used as feedback means to notify the user of a certain situation. For example, when the user instructs the wearable device 100 to execute a certain function (e.g., an exercise assistance mode), when the user increases exercise intensity, when the wearable device 100 notifies the user with the start of a selected exercise, or when the user desires to start an exercise after stopping the exercise for a while, the wearable device 100 may generate the shake motion. The cases where the shake motion may be generated are not limited to the foregoing examples, and the shake motion may be generated in any cases where a notification is provided to the user.

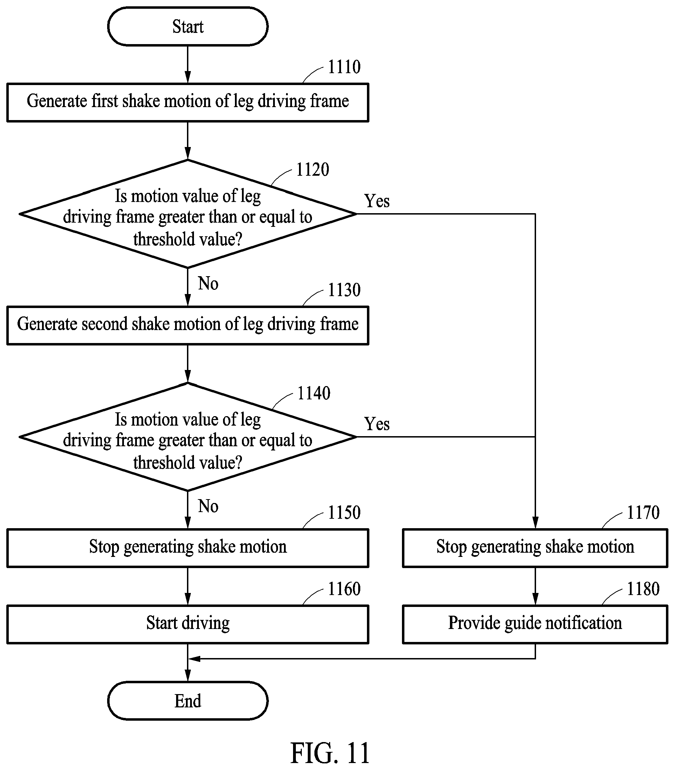

FIG. 11 is a flowchart illustrating operations of an operating method of a wearable device for performing a normal wear detection function, according to an embodiment. In an embodiment, at least one of operations of FIG. 11 may be simultaneously or parallelly performed with one another, and the order of the operations may be changed. In addition, at least one of the operations may be omitted or another operation may be additionally performed.

Referring to FIG. 11, in operation 1110, the wearable device 100 may generate first shake motion of a leg driving frame through test torque. In an embodiment, the wearable device 100 may generate the first shake motion that shakes at least one of the first leg driving frame 55, the second leg driving frame 50, and the waist support frame 20 in a front direction. Alternatively, the wearable device 100 may induce the motion of the waist support frame 20 in the front direction by moving the first and second leg driving frames 55 and 50 simultaneously in a rear direction.

In operation 1120, the wearable device 100 may determine whether a motion value of the leg driving frame is greater than or equal to a threshold value. In an embodiment, the wearable device 100 may determine whether a motion value of a support frame obtained when the first shake motion is generated in the support frame is greater than or equal to the threshold value.

When the motion value of the leg driving frame is greater than or equal to the threshold value ('Yes' in operation 1120), the wearable device 100, in operation 1170, may stop generating the shake motion. In operation 1180, the wearable device 100 may provide the user with a guide notification to induce proper wearing of the wearable device 100. For example, a guide voice may be provided through the sound output module 550 of the wearable device 100 and/or the sound output module 750 of the electronic device 210, or the guide notification may be provided in a form of a pop-up message through the display module 740 of the electronic device 210.

When the motion value of the leg driving frame is less than the threshold value ('No' in operation 1120), the wearable device 100, in operation 1130, may generate second shake motion of the leg driving frame through test torque. The second shake motion may be shake motion in a different form (e.g., in a different direction) from the first shake motion. In an embodiment, the wearable device 100 may generate the second shake motion that shakes at least one of the first leg driving frame 55, the second leg driving frame 50, and the waist support frame 20 in the rear direction. Alternatively, the wearable device 100 may induce the motion of the waist support frame 20 in the rear direction by moving the first and second leg driving frames 55 and 50 simultaneously in the front direction.

When the motion value of the leg driving frame is greater than or equal to the threshold value ('Yes' in operation 1140), the wearable device 100, in operation 1170, may stop generating the shake motion, and in operation 1180, may provide the user with a guide notification to induce proper wearing of the wearable device 100.

When the motion value of the leg driving frame is less than the threshold value ('No' in operation 1140), the wearable device 100 may determine that the wearable device 100 is normally worn on the user's body. The wearable device 100 may stop generating the shake motion in operation 1150 and start driving the wearable device 100 in operation 1160.

In an embodiment, in a test in which a wearing detection function is performed, the first shake motion in operation 1110 and the second shake motion in operation 1130 may be repeatedly performed.

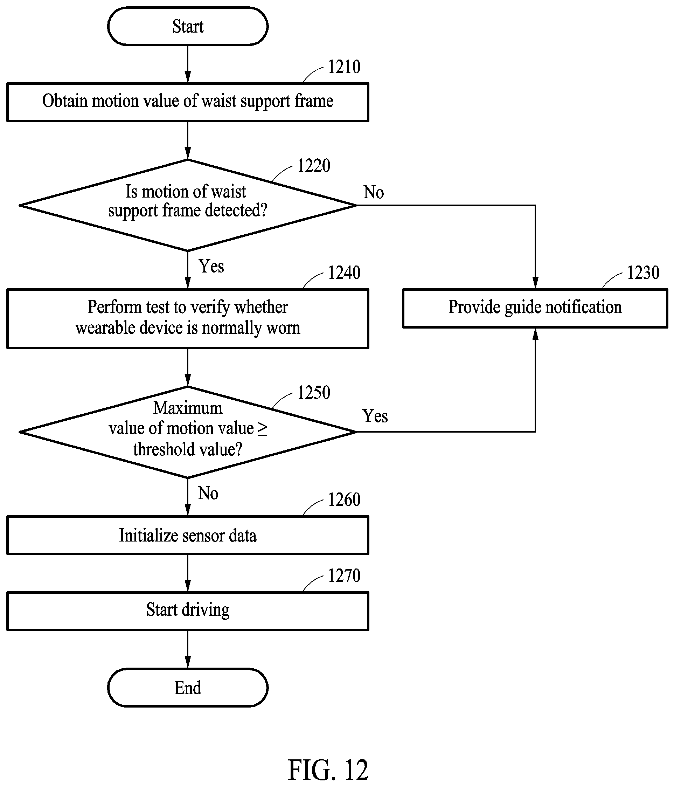

FIG. 12 is a flowchart illustrating a process of a test in which a wear detection function is performed when a wearable device operates in an exercise assistance mode, according to an embodiment. In an embodiment, at least one of operations of FIG. 12 may be simultaneously or parallelly performed with one another, and the order of the operations may be changed. In addition, at least one of the operations may be omitted or another operation may be additionally performed.

Referring to FIG. 12, when a user selects the execution of the exercise assistance mode of the wearable device 100, the wearable device 100 may perform the following operations to determine whether the wearable device 100 is worn on the user's body. In operation 1210, the wearable device 100 may obtain a motion value of the waist support frame 20 of the wearable device 100 through an inertia sensor (e.g., the inertia sensor 135 or the inertia sensor 522).

In operation 1220, the wearable device 100 may determine whether motion of the waist support frame 20 is detected based on the motion value of the waist support frame 20. When the motion of the waist support frame 20 is not detected ('No' in operation 1220) (e.g., the motion value of the waist support frame 20 is 0), the wearable device 100, in operation 1230, may provide the user with a guide notification (e.g., a guide voice saying, 'Use the wearable device after wearing it') to induce wearing of the wearable device 100.

When the motion of the waist support frame 20 is detected ('Yes' in operation 1220), the wearable device 100, in operation 1240, may perform a test to verify whether the wearable device 100 is normally worn. The wearable device 100 may generate shake motion based on test torque for the test. The wearable device 100 may obtain sensor data including motion information of components (e.g., the first and second leg driving frames 55 and 50 and the waist support frame 20) of the wearable device 100 through a sensor module while the shake motion is generated.

In operation 1250, the wearable device 100 may determine whether a maximum value of a motion value of the components of the wearable device 100 included by the sensor data is greater than or equal to a threshold value. The wearable device 100 may determine whether the maximum value of the motion value is greater than or equal to the threshold value based on a change of the motion value between before the test torque is generated and when a support frame of the wearable device 100 moves to the maximum after the test torque is generated.

When the maximum value of the motion value of the components of the wearable device 100 is greater than or equal to the threshold value ('Yes' in operation 1250), the wearable device 100, in operation 1230, may provide the user with a guide notification (e.g., a guide voice saying, 'Please properly wear the wearable device' or 'Please fasten the fastener of the right leg') to induce normal wearing.

When the maximum value of the motion value of the components of the wearable device 100 is less than the threshold value ('No' in operation 1250), the wearable device 100, in operation 1260, may initialize (or calibrate) the sensor data of the sensor module of the wearable device 100 after stopping the test. An initializing process of the sensor data may be a process of adjusting sensor data output from the sensor module to a reference value when the user poses a preparation or basic posture. Because a body state (e.g., a leg angle or a torso inclination) may vary depending on users in their preparation or basic posture, sensor data output from the sensor module 520 may be initialized to accurately sense a physical ability of the users. **In** an embodiment, when failing to initialize the sensor data, the wearable device 100 may generate shake motion or provide a guide notification (e.g., a guide voice saying, 'Please stand straight') to notify the failure. Then, the wearable device 100 may start driving for the exercise assistance mode in operation 1270.

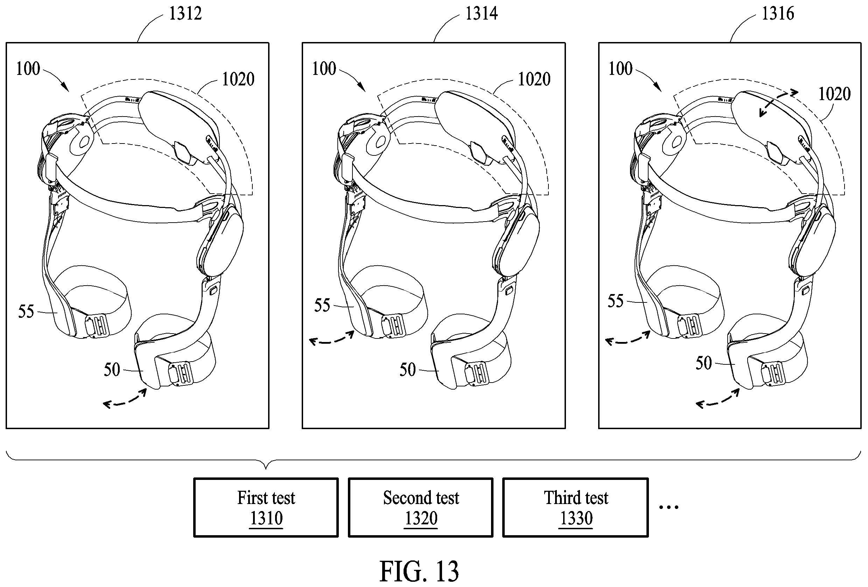

FIG. 13 is a diagram illustrating a combination of tests to perform a wear detection function, according to an embodiment.

Referring to FIG. 13, a combination of shake motion may be various in a test to perform the wear detection function. For example, a wearable device 100 may perform a first test 1310 by combining shake motion 1312 for shaking a second leg driving frame 50 in a front direction, shake motion 1314 for shaking a first leg driving frame 55 in the front direction, and shake motion 1316 for shaking a waist support frame 1020 in a rear direction by shaking the first and second leg driving frames 55 and 50 simultaneously in the front direction. In a process of performing the first test 1310, the order of performing the shake motion 1312, 1314, and 1316, the number of repetitions thereof, and a combination thereof may be variously modified.

In an embodiment, the test to perform the wear detection function may be modified and performed at a specific time interval (e.g., everyday) or at a specific number of tests. For example, the first test 1310 may be performed today, a second test 1320 having a different combination of shake motion from the first test 1310 may be performed tomorrow, and a third test 1330 having a different combination of shake motion from the second test 1320 may be performed the day after tomorrow. The number of repeating shake motion and/or the intensity of the shake motion may be variously set for each of the first, second, and third tests 1310, 1320, and 1330.

Such diversification of the combination of shake motion may prevent or reduce chances of the user from becoming bored due to a repeated pattern of shake motion in the process of performing the test to perform the wear detection function.

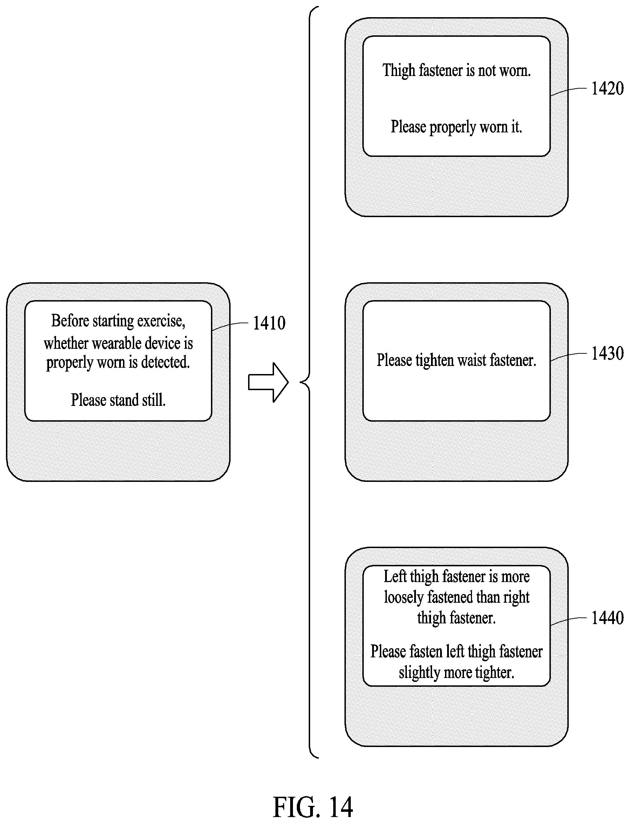

FIG. 14 is a diagram illustrating examples of a guide notification according to an embodiment.

Referring to FIG. 14, the wearable device 100 may provide a user with various guide notifications according to wear detection determination of the wearable device 100. The illustrated guide notifications may represent pop-up messages provided to the user through the electronic device 210. When a test to verify whether the wearable device 100 is properly worn on the user's body is performed, a pop-up message 1410 to notify the user of progress of the test may be provided.

After the test is performed, the wearable device 100 may determine a test result based on sensor data. "Based on" as used herein covers based at least on. When the wearable device 100 is determined not to be properly worn on the user's body as the test result, the wearable device 100 may request the electronic device 210 to provide a guide notification to induce the proper wearing of the wearable device 100, and the electronic device 210 may provide the user with the guide notification to induce the proper wearing of the wearable device 100. For example, in a test process, when a motion value of the waist support frame 20 is great, and a waist fastener is determined not to be properly fastened, the electronic device 210 may provide a pop-up message 1430 to request the user to properly wear the waist fastener. For example, a maximum value of a motion value of the leg driving frame (e.g., first and second leg driving frames 55 and 50) is detected to be greater than or equal to a threshold value in the test process, and the thigh fastener (e.g., first and second thigh fasteners 2 and 1) is determined not to be worn on the user, the electronic device 210 may provide a pop-up message 1420 to request the user to fasten the thigh fastener. For example, when a maximum value of a motion value of the second leg driving frame 50 is detected to be greater than a maximum value of a motion value of the first leg driving frame 55 in the test process, and the second thigh fastener 1 of a left leg is determined to be more loosely fastened than the first thigh fastener 2 of a right leg, the electronic device 210 may provide a pop-up message 1440 to request the user to tighten the fastening of the second thigh fastener 1.

The content of the pop-up messages 1410, 1420, 1430, and 1440 described above as examples may be provided to the user in a guide voice form.

It should be appreciated that various embodiments of the present disclosure and the terms used therein are not intended to limit the technological features set forth herein to particular embodiments and include various changes, equivalents, or replacements for a corresponding embodiment. In connection with the description of the drawings, like reference numerals may be used for similar or related components. It is to be understood that a singular form of a noun corresponding to an item may include one or more of the things, unless the relevant context clearly indicates otherwise. As used herein, "A or B", "at least one of A and B", "at least one of A or B", "A, B or C", "at least one of A, B and C", and "A, B, or C," each of which may include any one of the items listed together in the corresponding one of the phrases, or all possible combinations thereof. Terms such as "first", "second", or "first" or "second" may simply be used to distinguish the component from other components in question, and do not limit the components in other aspects (e.g., importance or order). It is to be understood that if an element (e.g., a first element) is referred to, with or without the term "operatively" or "communicatively," as "coupled with," "coupled to," "connected with," or "connected to" another element (e.g., a second element), the element may be coupled with the other element directly (e.g., by wire), wirelessly, or via at least a third element(s).

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC). Thus, each "module" herein may comprise circuitry.

The software may include a computer program, a piece of code, an instruction, or some combination thereof, to independently or collectively instruct or configure the processing device to operate as desired. Software and data may be embodied permanently or temporarily in any type of machine, component, physical or virtual equipment, or computer storage medium or device capable of providing instructions or data to or being interpreted by the processing device. The software also may be distributed over network-coupled computer systems so that the software is stored and executed in a distributed fashion. The software and data may be stored by one or more non-transitory computer-readable recording mediums. Embodiments as set forth herein may be implemented as software including one or more instructions that are stored in a storage medium (e.g., the memory 514) that is readable by a machine. For example, a processor of the machine may invoke at least one of the one or more instructions stored in the storage medium and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an example embodiment, a method according to example embodiments may be included and provided in a computer program product. The computer program product may be traded as a product between a seller and a buyer. The computer program product may be distributed in the form of a machine-readable storage medium (e.g., a compact disc read-only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as a memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one among the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

While the disclosure has been illustrated and described with reference to various embodiments, it will be understood that the various embodiments are intended to be illustrative, not limiting. It will further be understood by those skilled in the art that various changes in form and detail may be made without departing from the full scope of the disclosure, including the appended claims. It will also be understood that any of the embodiment(s) described herein may be used in conjunction with any other embodiment(s) described herein.

## Claims

1. A wearable device (100) configured to be worn on a user's body, the wearable device (100) comprising:
a driving module (530; 530-1), comprising a motor and/or circuitry, configured to generate torque to be applied to the user's body;
a leg driving frame (50; 55) configured to relay the generated torque to the user's leg;
a thigh fastener (1; 2) connected to the leg driving frame (50; 55) and configured to connect the leg driving frame (50; 55) to the user's leg;
a sensor module (520), comprising one or more sensors, configured to obtain sensor data comprising motion information regarding the leg driving frame (50; 55); and
a control module (510), comprising control circuitry, configured to control the wearable device (100) based on the sensor data, and wherein:
the control module (510) is further configured to:
perform a test to determine whether the wearable device (100) is properly worn on the user's leg, and in the test,
control the driving module (530; 530-1) to generate test torque to induce a shake motion in the leg driving frame (50; 55), wherein the test torque has a torque value pattern to generate the shake motion, and wherein the shake motion comprises movement in a front or rear direction of the wearable device (100) and determine whether the test is passed based on the sensor data obtained after the test torque is generated.

2. The wearable device of claim **1,** further comprising a waist support frame configured to be worn proximate the user's waist, wherein
the control module is further configured to determine whether the test is passed based on a motion value of the waist support frame obtained after the test torque is generated.

3. The wearable device (100) of claim 1 or 2, wherein
the leg driving frame comprises:
a first leg driving frame (55) configured to relay torque of the driving module to the user's right leg; and
a second leg driving frame (50) configured to relay torque of the driving module to the user's left leg.

4. The wearable device (100) of claim 3, wherein
the driving module (530; 530-1) is further configured to generate the test torque such that at least one of the first leg driving frame (55) and the second leg driving frame (50) moves in a front and/or rear direction of the wearable device (100) by control of the control module (510).

5. The wearable device (100) of claim 3, wherein
the driving module (530; 530-1) is further configured to generate a test torque such that at least one of the first leg driving frame (55) and the second leg driving frame (50) moves back and forth between front and rear directions of the wearable device (100) by control of the control module (510).

6. The wearable device (100) of claim 3, wherein
the driving module (530; 530-1) is further configured to generate the test torque such that the first leg driving frame (55) and the second leg driving frame (50) move in the same direction by control of the control module (510).

7. The wearable device (100) of any one of claims 1-6, wherein
the control module (510) is further configured to determine at least one of a moving direction of the leg driving frame to which the test torque is applied based on a user set value by selection of the user, an intensity of the test torque, and an application pattern of the test torque.

8. The wearable device (100) of any one of claims 1-7, wherein
the sensor module (520) comprises an angle sensor configured to obtain a motion value of the leg driving frame, and
the control module (510) is further configured to determine whether the test is passed based on a threshold value and the motion value of the leg driving frame obtained after the test torque is generated.

9. The wearable device (100) of claim 8, wherein
the control module (510) is further configured to determine that the test is passed in response to a maximum value of the motion value of the leg driving frame obtained after the test torque is generated being less than the threshold value.

10. The wearable device (100) of claim 8, wherein
the control module (510) is further configured to determine that the test is not passed in response to a maximum value of the motion value of the leg driving frame obtained after the test torque is generated being greater than or equal to the threshold value.

11. The wearable device (100) of claim 10, wherein
the control module (510) is further configured to provide the user with a guide notification to induce proper wearing of the thigh fastener in response to determining that the test is not passed.

12. The wearable device (100) of claim 10, wherein
the control module (510) is further configured to repeatedly perform the test until the wearable device (100) is determined to be properly worn on the user's leg based on the sensor data obtained through the sensor module (520) in response to determining that the test is not passed.

13. An operation method of a wearable device (100), the operation method comprising:
performing a test to determine whether the wearable device (100) is properly worn on a user's body; and
driving the wearable device (100) in response to determining that the test is passed, wherein
the performing the test comprises:
generating test torque through a driving module (530; 530-1) comprising a motor and/or circuitry to induce a shake motion in a leg driving frame (50; 55) of the wearable device (100), wherein the test torque has a torque value pattern to generate the shake motion, and wherein the shake motion comprises movement in a front or rear direction of the wearable device (100);
obtaining sensor data comprising a motion value of a leg driving frame of the wearable device (100) after the test torque is generated; and
determining whether the test is passed based on the sensor data.

14. The operation method of claim 13, wherein the performing the test comprises:
obtaining a motion value of the waist support frame after the test torque is generated; and
determine whether the test is passed based on the obtained motion value of the waist support frame.

15. A non-transitory computer-readable storage medium storing instructions that, when executed by a processor, cause the processor to perform the operation method of any one of claims 13 or 14.

## Patentansprüche

1. Tragbare Vorrichtung (100), die konfiguriert ist, am Körper eines Benutzers getragen zu werden, wobei die tragbare Vorrichtung (100) umfasst:
ein Antriebsmodul (530; 530-1), das einen Motor und/oder eine Schaltung umfasst und konfiguriert ist, um ein Drehmoment zu erzeugen, das auf den Körper des Benutzers ausgeübt wird;
ein Beinantriebsrahmen (50; 55), der konfiguriert ist, um das erzeugte Drehmoment auf das Bein des Benutzers zu übertragen;
eine Oberschenkelbefestigungsvorrichtung (1; 2), die mit dem Beinantriebsrahmen (50; 55) verbunden ist und konfiguriert ist, um den Beinantriebsrahmen (50; 55) mit dem Bein des Benutzers zu verbinden;
ein Sensormodul (520), das einen oder mehrere Sensoren umfasst und konfiguriert ist, um Sensordaten zu erhalten, die Bewegungsinformationen bezüglich des Beinantriebsrahmens (50; 55) enthalten; und
ein Steuermodul (510), das eine Steuerschaltung umfasst und konfiguriert ist, um die tragbare Vorrichtung (100) basierend auf den Sensordaten zu steuern, wobei:
das Steuermodul (510) ferner konfiguriert ist zum:
Durchführen eines Tests, um zu bestimmen, ob die tragbare Vorrichtung (100) ordnungsgemäß am Bein des Benutzers getragen wird, und, bei diesem Test,
Steuern des Antriebsmoduls (530; 530-1) um ein Testdrehmoment zu erzeugen, um eine Rüttelbewegung im Beinantriebsrahmen (50; 55) auszulösen, wobei das Testdrehmoment ein Drehmomentwertmuster aufweist, um die Rüttelbewegung zu erzeugen, und wobei die Rüttelbewegung eine Bewegung der tragbaren Vorrichtung (100) in Vorwärts- oder Rückwärtsrichtung umfasst, und Bestimmen, ob der Test bestanden wurde, basierend auf den nach Erzeugung des Testdrehmoments erhaltenen Sensordaten.

2. Tragbare Vorrichtung nach Anspruch 1, die ferner einen Taillenstützrahmen umfasst, der konfiguriert ist, um in der Nähe der Taille des Benutzers getragen zu werden, wobei
das Steuermodul ferner konfiguriert ist, um basierend auf einem Bewegungswert des Taillenstützrahmens, der nach Erzeugung des Testdrehmoments erhalten wurde, zu bestimmen, ob der Test bestanden wurde.

3. Tragbare Vorrichtung (100) nach Anspruch 1 oder 2, wobei
der Beinantriebsrahmen umfasst:
einen ersten Beinantriebsrahmen (55), der konfiguriert ist, um das Drehmoment des Antriebsmoduls auf das rechte Bein des Benutzers zu übertragen; und
einen zweiten Beinantriebsrahmen (50), der konfiguriert ist, um das Drehmoment des Antriebsmoduls auf das linke Bein des Benutzers zu übertragen.

4. Tragbare Vorrichtung (100) nach Anspruch 3, wobei
das Antriebsmodul (530; 530-1) ferner konfiguriert ist, um das Testdrehmoment derart zu erzeugen, dass sich zumindest einer des ersten Beinantriebsrahmens (55) und des zweiten Beinantriebsrahmens (50) durch die Steuerung des Steuermoduls (510) in Vorwärts- und/oder Rückwärtsrichtung der tragbaren Vorrichtung (100) bewegt.

5. Tragbare Vorrichtung (100) nach Anspruch 3, wobei
das Antriebsmodul (530; 530-1) ferner konfiguriert ist, um ein Testdrehmoment derart zu erzeugen, dass sich zumindest einer des ersten Beinantriebsrahmens (55) und des zweiten Beinantriebsrahmen (50) durch die Steuerung des Steuermoduls (510) zwischen der Vorwärts- und Rückwärtsrichtung der tragbaren Vorrichtung (100) vor und zurück bewegt.

6. Tragbare Vorrichtung (100) nach Anspruch 3, wobei
das Antriebsmodul (530; 530-1) ferner konfiguriert ist, um das Testdrehmoment derart zu erzeugen, dass sich der erste Beinantriebsrahmen (55) und der zweite Beinantriebsrahmen (50) durch die Steuerung des Steuermoduls (510) in dieselbe Richtung bewegen.

7. Tragbare Vorrichtung (100) nach einem der Ansprüche 1-6, wobei
das Steuermodul (510) ferner konfiguriert ist, um mindestens eine von einer Bewegungsrichtung des Beinantriebsrahmens, auf den das Testdrehmoment aufgebracht wird, basierend auf einem vom Benutzer durch Auswahl des Benutzers eingestellten Wert, einer Intensität des Testdrehmoments und einem Anwendungsmuster des Testdrehmoments zu bestimmen.

8. Tragbare Vorrichtung (100) nach einem der Ansprüche 1-7, wobei
das Sensormodul (520) einen Winkelsensor umfasst, der konfiguriert ist, um einen Bewegungswert des Beinantriebsrahmens zu erhalten, und
das Steuermodul (510) ferner konfiguriert ist, um basierend auf einem Schwellenwert und dem Bewegungswert des Beinantriebsrahmens, der nach Erzeugung des Testdrehmoments erhalten wurde, zu bestimmen, ob der Test bestanden wurde.

9. Tragbare Vorrichtung (100) nach Anspruch 8, wobei
das Steuermodul (510) ferner konfiguriert ist, um als Reaktion darauf, dass ein Maximalwert des Bewegungswerts des Beinantriebsrahmens, der nach Erzeugung des Testdrehmoments erhalten wurde, kleiner als der Schwellenwert ist, zu bestimmen, dass der Test bestanden wurde.

10. Tragbare Vorrichtung (100) nach Anspruch 8, wobei
das Steuermodul (510) ferner konfiguriert ist, um als Reaktion darauf, dass ein Maximalwert des Bewegungswerts des Beinantriebsrahmens, der nach Erzeugung des Testdrehmoments erhalten wurde, größer oder gleich dem Schwellenwert ist, zu bestimmen, dass der Test nicht bestanden wurde.

11. Tragbare Vorrichtung (100) nach Anspruch 10, wobei
das Steuermodul (510) ferner konfiguriert ist, um dem Benutzer als Reaktion auf das Bestimmen, dass der Test nicht bestanden wurde, eine Anleitungsmeldung bereitzustellen, die dazu anleitet, die Oberschenkelbefestigungsvorrichtung ordnungsgemäß anzulegen.

12. Tragbare Vorrichtung (100) nach Anspruch 10, wobei
das Steuermodul (510) ferner konfiguriert ist, um als Reaktion auf das Bestimmen, dass der Test nicht bestanden wurde, den Test wiederholt durchzuführen, bis basierend auf den über das Sensormodul (520) erhaltenen Sensordaten bestimmt wird, dass die tragbare Vorrichtung (100) ordnungsgemäß am Bein des Benutzers getragen wird.

13. Verfahren zum Betreiben einer tragbaren Vorrichtung (100), wobei das Betriebsverfahren umfasst:
Durchführen eines Tests, um zu bestimmen, ob die tragbare Vorrichtung (100) ordnungsgemäß am Körper eines Benutzers getragen wird; und
Antreiben der tragbaren Vorrichtung (100) als Reaktion auf das Bestimmen, dass der Test bestanden wurde, wobei
das Durchführen des Tests umfasst:
Erzeugen eines Testdrehmoments über ein Antriebsmodul (530; 530-1), das einen Motor und/oder eine Schaltung umfasst, um eine Rüttelbewegung in einem Beinantriebsrahmen (50; 55) der tragbaren Vorrichtung (100) zu erzeugen, wobei das Testdrehmoment ein Drehmomentwertmuster aufweist, um die Rüttelbewegung zu erzeugen, und wobei die Rüttelbewegung eine Bewegung der tragbaren Vorrichtung (100) in Vorwärts- oder Rückwärtsrichtung umfasst;
Erhalten von Sensordaten, die einen Bewegungswert eines Beinantriebsrahmens der tragbaren Vorrichtung (100) umfassen, nachdem das Testdrehmoment erzeugt wurde; und
Bestimmen, ob der Test basierend auf den Sensordaten bestanden wurde.

14. Betriebsverfahren nach Anspruch 13, wobei das Durchführen des Tests umfasst:
Erhalten eines Bewegungswerts des Taillenstützrahmens, nachdem das Testdrehmoment erzeugt wurde; und
Bestimmen, ob der Test bestanden wurde, basierend auf dem erhaltenen Bewegungswert des Hüftstützrahmens.

15. Nichtransitorisches, computerlesbares Speichermedium, das Anweisungen speichert, die, wenn sie von einem Prozessor ausgeführt werden, den Prozessor veranlassen, das Verfahren nach einem der Ansprüche 13 oder 14 durchzuführen.

## Revendications

1. Dispositif portable (100) configuré pour être porté sur le corps d'un utilisateur, le dispositif portable (100) comprenant :
un module d'entraînement (530 ; 530-1), comprenant un moteur et/ou un circuit, configuré pour générer un couple destiné à être appliqué au corps de l'utilisateur ;
un cadre d'entraînement de jambe (50 ; 55) configuré pour transmettre le couple généré à la jambe de l'utilisateur ;
une attache de cuisse (1 ; 2) reliée au cadre d'entraînement de jambe (50 ; 55) et configurée pour relier le cadre d'entraînement de jambe (50 ; 55) à la jambe de l'utilisateur ;
un module de capteur (520), comprenant un ou plusieurs capteurs, configuré pour obtenir des données de capteur comprenant des informations de mouvement concernant le cadre d'entraînement de jambe (50 ; 55) ; et
un module de commande (510), comprenant un circuit de commande, configuré pour commander le dispositif portable (100) en se basant sur les données de capteur, et dans lequel :
le module de commande (510) est en outre configuré pour :
effectuer un test afin de déterminer si le dispositif portable (100) est correctement porté sur la jambe de l'utilisateur, et dans le test,
commander le module d'entraînement (530 ; 530-1) afin de générer un couple d'essai destiné à induire un mouvement de secousse dans le cadre d'entraînement de jambe (50 ; 55), le couple d'essai présentant un motif de valeur de couple permettant de générer le mouvement de secousse, et le mouvement de secousse comprenant un déplacement dans une direction d'avant ou d'arrière du dispositif portable (100), et déterminer si l'essai est réussi en se basant sur les données de capteur obtenues après la génération du couple d'essai.

2. Dispositif portable selon la revendication 1, comprenant en outre un cadre de soutien de taille configuré pour être porté à proximité de taille de l'utilisateur, dans lequel
le module de commande est en outre configuré pour déterminer si le test a été réussi en se basant sur une valeur de mouvement du cadre de soutien de taille obtenue après la génération du couple d'essai.

3. Dispositif portable (100) selon la revendication 1 ou 2, dans lequel
le cadre d'entraînement de jambe comprend :
un premier cadre d'entraînement de jambe (55) configuré pour relayer le couple du module d'entraînement à la jambe droite de l'utilisateur ; et
un deuxième cadre d'entraînement de jambe (50) configuré pour relayer le couple du module d'entraînement à la jambe gauche de l'utilisateur.

4. Dispositif portable (100) selon la revendication 3, dans lequel
le module d'entraînement (530 ; 530-1) est en outre configuré pour générer le couple d'essai de telle sorte qu'au moins l'un du premier cadre d'entraînement de jambe (55) et du deuxième cadre d'entraînement de jambe (50) se déplace dans une direction d'avant et/ou d'arrière du dispositif portable (100) par la commande du module de commande (510).

5. Dispositif portable (100) selon la revendication 3, dans lequel
le module d'entraînement (530 ; 530-1) est en outre configuré pour générer un couple d'essai de telle sorte qu'au moins un du premier cadre d'entraînement de jambe (55) et du deuxième cadre d'entraînement de jambe (50)) se déplace d'avant en arrière entre une direction d'avant et/ou d'arrière du dispositif portable (100) par la commande du module de commande (510).

6. Dispositif portable (100) selon la revendication 3, dans lequel
le module d'entraînement (530 ; 530-1) est en outre configuré pour générer le couple d'essai de telle sorte que le premier cadre d'entraînement de jambe (55) et le deuxième cadre d'entraînement de jambe (50) se déplacent dans la même direction par la commande du module de commande (510).

7. Dispositif portable (100) selon l'une quelconque des revendications 1 à 6, dans lequel
le module de commande (510) est en outre configuré pour déterminer au moins l'une parmi une direction de déplacement du cadre d'entraînement de jambe auquel le couple d'essai est appliqué en fonction d'une valeur d'utilisateur définie via une sélection effectuée par l'utilisateur, une intensité du couple d'essai et un profil d'application du couple d'essai.

8. Dispositif portable (100) selon l'une quelconque des revendications 1 à 7, dans lequel
le module de capteur (520) comprend un capteur d'angle configuré pour déterminer une valeur de mouvement du cadre d'entraînement de jambe, et
le module de commande (510) est en outre configuré pour déterminer si le test a été réussi en se basant sur une valeur seuil et sur la valeur de mouvement du cadre d'entraînement de jambe obtenue après la génération du couple d'essai.

9. Dispositif portable (100) selon la revendication 8, dans lequel
le module de commande (510) est en outre configuré pour déterminer que le test a été réussi en réponse à une valeur maximale de la valeur de mouvement du cadre d'entraînement de jambe obtenue après la génération du couple d'essai étant inférieure à la valeur seuil.

10. Dispositif portable (100) selon la revendication 8, dans lequel
le module de commande (510) est en outre configuré pour déterminer que le test n'a pas été réussi en réponse à une valeur maximale de la valeur de mouvement du cadre d'entraînement de jambe obtenue après la génération du couple d'essai étant supérieure ou égale à la valeur seuil.

11. Dispositif portable (100) selon la revendication 10, dans lequel
le module de commande (510) est en outre configuré pour fournir à l'utilisateur une notification de guidage visant à l'inciter à porter correctement l'attache de cuisse en réponse à la détermination que le test n'a pas été réussi.

12. Dispositif portable (100) selon la revendication 10, dans lequel
le module de commande (510) est en outre configuré pour effectuer de manière répétée le test jusqu'à ce qu'il soit déterminé que le dispositif portable (100) est correctement porté sur la jambe de l'utilisateur, en se basant sur les données de capteur obtenues par l'intermédiaire du module de capteur (520), en réponse à la détermination que le test n'a pas été réussi.

13. Procédé de fonctionnement d'un dispositif portable (100), le procédé de fonctionnement comprenant :
effectuer un test visant à déterminer si le dispositif portable (100) est correctement porté sur le corps de l'utilisateur ; et
commander le dispositif portable (100) en réponse à la détermination que le test a été réussi, dans lequel
effectuer le test comprend :
générer un couple d'essai par l'intermédiaire d'un module d'entraînement (530 ; 530-1) comprenant un moteur et/ou un circuit destinés à induire un mouvement de secousse dans un cadre d'entraînement de jambe (50 ; 55) du dispositif portable (100), dans lequel le couple d'essai présente un motif de valeur de couple permettant de générer le mouvement de secousse, et le mouvement de secousse comprenant un déplacement dans une direction d'avant ou d'arrière du dispositif portable (100) ;
obtenir des données de capteur comprenant une valeur de mouvement d'un cadre d'entraînement de jambe du dispositif portable (100) après la génération du couple d'essai ; et
déterminer si le test a été réussi en se basant sur les données de capteur.

14. Procédé de fonctionnement selon la revendication 13, dans lequel effectuer le test comprend :
obtenir une valeur de mouvement du cadre de soutien de taille après que le couple d'essai a été généré; et
déterminer si le test est réussi en se basant sur la valeur de mouvement obtenue du cadre de soutien de taille.

15. Support de stockage non transitoire lisible par ordinateur, stockant des instructions qui, lorsqu'elles sont exécutées par un processeur, amènent le processeur à mettre en œuvre le procédé de fonctionnement selon l'une quelconque des revendications 13 ou 14.
